# EUROPEAN PATENT APPLICATION

(11) **EP 4 825 936 A1**
(43) Date of publication of application: **21.10.2026**
(21) Application number: 24903663.3
(22) Date of filing: 10.12.2024
(51) Int. Cl.: C09J 7/38, C09J 5/00

(54) **DETACHABLE STRUCTURE, SUSPENDER, FIXTURE, PICKUP TOOL, AND WELFARE ARTICLE**

(30) Priority: 14.12.2023 JP 2023211173
(71) Applicant: National Institute for Materials Science, Tsukuba-shi, Ibaraki 305-0047 (JP)
(72) Inventor: HOSODA, Naoe, Tsukuba-shi, Ibaraki 305-0047 (JP)
(74) Representative: V.O.
(86) International application number: PCT/JP2024/043520
(87) International publication number: WO 2025/127009

(57) **Abstract**

This structure (1000) is attachable and detachable with respect to a surface (200) of an object (M2). The structure includes a plurality of structural units (100) attachable and detachable with respect to the surface of the object (M2), joint parts (90) respectively connected to the plurality of structural units (100), and a binding part (91) configured to bind the joint parts (90) connected to the plurality of structural units (100) to each other such that the plurality of structural units (100) do not detach from the surface (200) when the structure (1000) is adhered to the surface (200). Each of the plurality of structural units (100) has at least one attachment/detachment part (20). The attachment/detachment part (20) includes a shaft (24), and an adhesive film (21) provided at an end of the shaft (24).

## Description

### TECHNICAL FIELD

The present invention relates to a detachable structure, a suspender, a fixture, a pickup tool, and a welfare article.

Priority is claimed on Japanese Patent Application No. 2023-211173, filed December 14, 2023, the content of which is incorporated herein by reference.

### BACKGROUND ART

In the related art, pressure-sensitive adhesive sheets using a re-peelable pressure-sensitive adhesive are known to be peelable without leaving adhesive residue on an adherend, even after a certain period of time has elapsed since it was attached to the adherend. Pressure-sensitive adhesive sheets are used in various fields, such as manufacturing processes of electronic equipment. In recent years, there has been an increasing demand for a higher adhesive force, and surface shapes of adherends have become more complicated. In addition, for example, when used in a manufacturing process for electronic equipment, so-called "rework" in which pressure-sensitive adhesive sheets are peeled (detached) from members of products in order to reuse the members may be performed. Therefore, pressure-sensitive adhesive sheets are required to achieve both excellent adhesiveness and conformability to adherends, while also being readily removable.

Under such circumstances, the inventor of this application has conducted extensive research focusing on the structure of adhesive legs of small animals that can detachably fix themselves to adherends having diverse surface shapes. In the course of this research, the inventor analyzed the mechanism by which flies form setae during the pupal stage and thereby invented, based on this inspiration, an adhesive structure that can achieve both excellent conformability to an adherend and an excellent adhesive force, while also being readily removable from the adherend (Patent Document 1). The adhesive structure disclosed in Patent Document 1 has a structure that imitates the legs of a fly.

### Citation List

### Patent Document

Patent Document 1: Japanese Patent No. 7195026

### SUMMARY OF INVENTION

### Technical Problem

In the adhesive structure of Patent Document 1, the adhesive strength changes sensitively depending on the direction (angle) of a force applied to the structure when attached (adhered) to an adherend. By utilizing these characteristics, the adhesive structure of Patent Document 1 can achieve both a strong adhesive force to an adherend and ease of detachment from the adherend by changing the direction of a force applied to the structure.

On the other hand, the foregoing characteristics mean that the usable range of an adhesive structure is limited to a range of angles at which a strong adhesive force is exhibited. Therefore, if the usable range of an adhesive structure can be expanded in a state in which both a strong adhesive force and ease of detachment (peeling) are achieved, an expanded range of applications of adhesive structures can be expected.

The present invention resolves the foregoing problems. That is, the present invention provides an adhesive mechanism (structure) that is attachable and detachable with respect to various locations.

### Solution to Problem

The inventor of this application has conducted intensive studies to achieve the foregoing object and, as a result, has found that the foregoing object can be achieved by the following configurations.
[1] There is provided a structure that is attachable and detachable with respect to a surface of an object. The structure includes a plurality of structural units attachable and detachable with respect to the surface of the target, joint parts respectively connected to the plurality of structural units, and a binding part configured to bind the joint parts connected to the plurality of structural units to each other such that the plurality of structural units do not detach from the surface when the structure is adhered to the surface. Each of the plurality of structural units has at least one attachment/detachment part. The attachment/detachment part includes a shaft, and an adhesive film provided at an end of the shaft.
[2] In the structure according to [1], the binding part is formed by binding the joint parts joined to the plurality of structural units to each other.
[3] In the structure according to [1], the binding part is a separate member from the joint parts.
[4] In the structure according to any one of [1] to [3], at least one of the plurality of structural units is further provided with a detachment knob.
[5] In the structure according to [4], at least two of the plurality of structural units are provided with the detachment knob, and the detachment knobs are joined to each other.
[6] In the structure according to any one of [1] to [5], the number of the structural units included in the structure is two to six.
[7] In the structure according to any one of [1] to [6], each of the plurality of structural units has a support body having a facing side disposed in a manner of facing the surface when being adhered to the surface, and a back side positioned on a side opposite to the facing side in a stacking direction intersecting the surface; a plurality of the attachment/detachment parts supported by the facing side of the support body and attachable and detachable with respect to the surface; and a buffer part corresponding to at least one of the plurality of attachment/detachment parts and disposed between the at least one corresponding attachment/detachment part and the back side of the support body in the stacking direction. Each of the plurality of attachment/detachment parts is disposed with the shaft toward one side in a disposition direction orthogonal to the stacking direction and with the adhesive film toward the other side, has the one side in the disposition direction fixed to the support body and forming a fixed end, and has the other side in the disposition direction forming a movable end configured to be movable in a direction away from the support body with the fixed end as a fulcrum.
[8] In the structure according to [7], in each of the plurality of structural units, the joint part is connected to an end portion on the one side in the disposition direction.
[9] In the structure according to any one of [1] to [6], the number of the attachment/detachment parts constituting each of the plurality of structural units is one, and the shaft of the attachment/detachment part constitutes the joint part.
[10] In the structure according to any one of [1] to [9], in the attachment/detachment part, the shaft is formed by a fused part in which parts of a plurality of first skeletal members are fused together, and the adhesive film is supported by non-fused parts of the plurality of first skeletal members.
[11] In the structure according to any one of [1] to [10], the joint parts are bound to each other by the binding part.
[12] A suspender including the structure according to any one of [1] to [11].
[13] A fixture including the structure according to any one of [1] to [11].
[14] A pickup tool including the structure according to any one of [1] to [11].
[15] A welfare article including the structure according to any one of [1] to [11].
[16] There is provided a method for using the structure according to any one of [1] to [10]. The method includes adhering the plurality of structural units to the surface in a state in which the plurality of structural units are disposed around a virtual binding point set on the surface with the shaft side of the attachment/detachment part toward the virtual binding point, and binding the joint parts connected to the plurality of structural units to each other with the binding part such that the plurality of structural units do not detach from the surface.

### Advantageous Effects of Invention

The present invention provides an adhesive mechanism (structure) that is attachable and detachable with respect to various locations.

### BRIEF DESCRIPTION OF DRAWINGS

[FIG. 1A] A schematic view of a structure in a state of being adhered to a surface of an object according to an embodiment.
[FIG. 1B] A schematic view of the structure in a state of being detached from the surface of the target according to the embodiment.
[FIG. 2] A schematic view of the structure shown in FIG. 1A from a facing side of a support body (from the surface side of the target).
[FIG. 3] A cross-sectional view of a structural unit shown in FIG. 2 taken along (III)-(III).
[FIG. 4A] An enlarged view of an attachment/detachment part of the embodiment (with a second skeletal member).
[FIG. 4B] Another enlarged view of the attachment/detachment part of the embodiment (without the second skeletal member).
[FIG. 4C] Another enlarged view of the attachment/detachment part of the embodiment.
[FIG. 4D] Another enlarged view of the attachment/detachment part of the embodiment.
[FIG. 5A] A flowchart showing a method for using the structure of the embodiment.
[FIG. 5B] A flowchart showing another method for using the structure of the embodiment.
[FIG. 6A] A schematic view of an example of the structure including two structural units from the facing side of the support body (from the surface side of the target) according to the embodiment.
[FIG. 6B] A schematic view of an example of the structure including three structural units from the facing side of the support body (from the surface side of the target) according to the embodiment.
[FIG. 6C] A schematic view of an example of the structure including four structural units from the facing side of the support body (from the surface side of the target) according to the embodiment.
[FIG. 6D] A schematic view of another example of the structure including four structural units from the facing side of the support body (from the surface side of the target) according to the embodiment.
[FIG. 7A] A schematic view showing a situation in which an object (M1) is suspended from a surface (200) using the structure according to the embodiment.
[FIG. 7B] A schematic view showing a state in which the structure is detached from the surface (200) in the configuration shown in FIG. 7A.
[FIG. 7C] A schematic view showing a situation in which the object (M1) is suspended from the vertical surface (200) using the structure according to the embodiment.
[FIG. 7D] A schematic view showing a situation in which the object (M1) is suspended from the surface (200) inclined with respect to a vertical direction using the structure in the configuration shown in FIG. 7C.
[FIG. 7E] A schematic view showing a situation in which the object (M1) is suspended from the curved surface (200) using the structure according to the embodiment.
[FIG. 7F] A schematic view showing a situation in which a plurality of structural units of the structure are respectively adhered to the different surfaces (200) to suspend the object (M1) according to the embodiment.
[FIG. 7G] Another schematic view showing a situation in which the plurality of structural units of the structure are respectively adhered to the different surfaces (200) to suspend the object (M1) according to the embodiment.
[FIG. 8A] A schematic view showing a situation in which an object (M2) is suspended (lifted) using the structure according to the embodiment.
[FIG. 8B] A schematic view showing a state in which the structure is detached from the target (M2) in the configuration shown in FIG. 8A.
[FIG. 8C] A schematic view showing a situation in which the structural units are adhered to the vertical surface (200) of the target (M2) to suspend (lift) the target (M2) according to the embodiment.
[FIG. 8D] A schematic view showing a situation in which the structural units are adhered to the surface (200) inclined with respect to the vertical direction to suspend (lift) the target (M2) in the configuration shown in FIG. 8C.
[FIG. 8E] A schematic view showing a situation in which the structural units are adhered to the curved surface (200) of the target (M2) to suspend (lift) the target (M2) according to the embodiment.
[FIG. 8F] A schematic view showing a situation in which the plurality of structural units of the structure are respectively adhered to the different surface (200) of the target (M2) to suspend (lift) the target (M2) according to the embodiment.
[FIG. 8G] Another schematic view showing a situation in which the plurality of structural units of the structure are respectively adhered to the different surface (200) of the target (M2) to suspend (lift) the target (M2) according to the embodiment.
[FIG. 9A] A schematic view of an example of the structure including the structural units respectively having detachment knobs.
[FIG. 9B] A schematic view showing a state in which the detachment knobs are pulled in a direction away from the surface in the configuration shown in FIG. 9A.
[FIG. 9C] Another schematic view of an example of the structure including the structural units respectively having the detachment knobs.
[FIG. 9D] A schematic view showing a state in which the detachment knobs are pulled in a direction away from the surface in the configuration shown in FIG. 9C.
[FIG. 10] A flowchart showing a method for manufacturing the structural unit of the embodiment.
[FIG. 11A] An explanatory view of an example of a method for manufacturing the attachment/detachment part (adhesive film: triangular shape).
[FIG. 11B] An explanatory view of another example of the method for manufacturing the attachment/detachment part (adhesive film: triangular shape).
[FIG. 11C] An explanatory view and photographs of an example of the method for manufacturing the attachment/detachment part (adhesive film: rhombic shape).
[FIG. 11D] An explanatory view and photographs of an example of the method for manufacturing the attachment/detachment part (adhesive film: heart shape).
[FIG. 11E] An explanatory view of an example of the method for manufacturing the attachment/detachment part (adhesive film: rhombic shape (multiple)).
[FIG. 12] An explanatory view of a part of the method for manufacturing the structural unit.
[FIG. 13] A cross-sectional view of a third unit shown in FIG. 12 taken along (XIII)-(XIII).
[FIG. 14] An explanatory view of another part of the method for manufacturing the structural unit.
[FIG. 15A] A schematic cross-sectional view showing a state in which a structure of Modification Example 1 of the embodiment is adhered to the surface.
[FIG. 15B] A schematic cross-sectional view showing a state in which the structure shown in FIG. 15A is detached from the surface.
[FIG. 16A] A schematic cross-sectional view showing a state in which a structure of Modification Example 2 of the embodiment is adhered to the surface.
[FIG. 16B] A photograph of the structure produced in an example for the configuration shown in FIG. 16A.
[FIG. 16C] A schematic cross-sectional view showing a state in which the structure shown in FIG. 16A is detached from the surface.
[FIG. 16D] A photograph showing a situation in which the structure shown in FIG. 16B is intended to be detached from the surface.
[FIG. 17A] A schematic view of the structure including two structural units from the facing side of the support body (from the surface side of the target) according to Modification Example 2 of the embodiment.
[FIG. 17B] A schematic view of the structure including three structural units from the facing side of the support body (from the surface side of the target) according to Modification Example 2 of the embodiment.
[FIG. 17C] A schematic view of the structure including four structural units from the facing side of the support body (from the surface side of the target) according to Modification Example 2 of the embodiment.
[FIG. 17D] A schematic view of the structure including six structural units from the facing side of the support body (from the surface side of the target) according to Modification Example 2 of the embodiment.
[FIG. 17E] A schematic view of the structure including two structural units from the facing side of the support body (from the surface side of the target) according to Modification Example 2 of the embodiment.
[FIG. 17F] A schematic view of the structure including three structural units from the facing side of the support body (from the surface side of the target) according to Modification Example 2 of the embodiment.
[FIG. 17G] A schematic view of the structure including four structural units from the facing side of the support body (from the surface side of the target) according to Modification Example 2 of the embodiment.
[FIG. 17H] A schematic view of the structure including six structural units from the facing side of the support body (from the surface side of the target) according to Modification Example 2 of the embodiment.

### DESCRIPTION OF EMBODIMENT

Hereinafter, the present invention will be described in detail.

The following constituent elements may be described on the basis of a representative embodiment of the present invention, but the present invention is not limited to such an embodiment.

In this specification, a range expressed using "to" refers to a range including numerical values specified before and after "to" as the lower and upper limit values.

### [Structure]

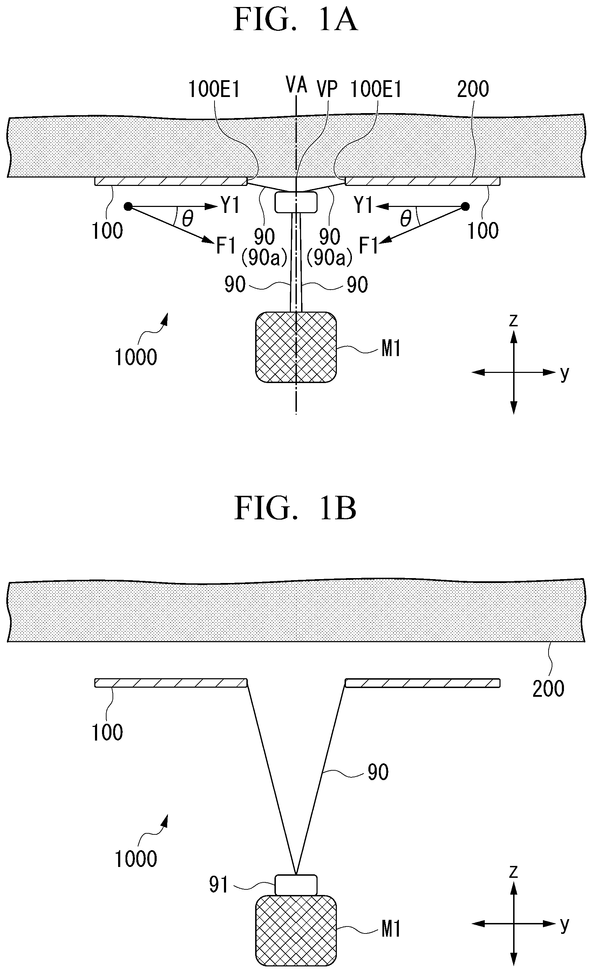

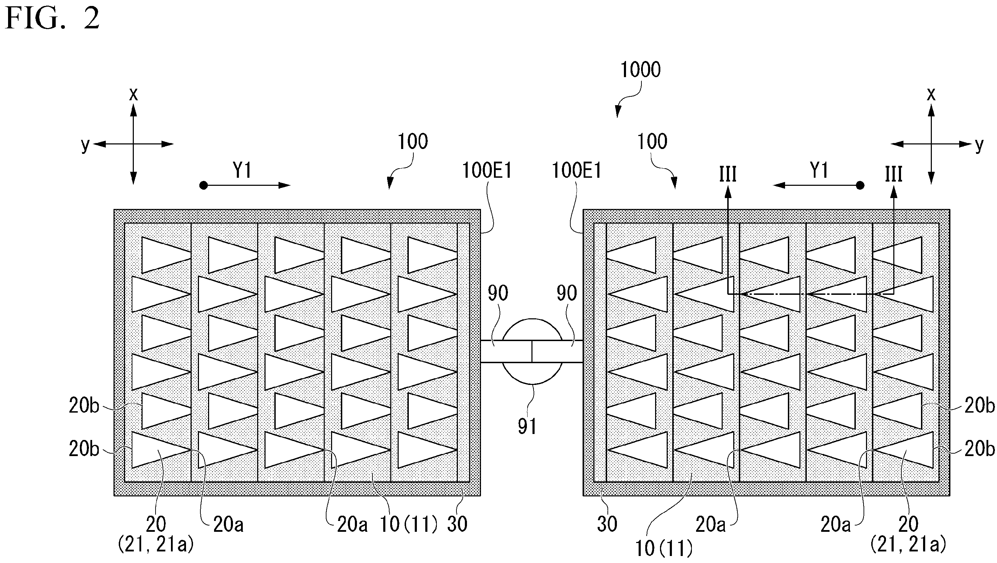

In the present embodiment, shown in FIGS. 1A and 1B, a structure 1000 that is attachable and detachable with respect to a surface 200 of an object (adherend) will be described. The structure 1000 has a plurality of structural units 100 attachable and detachable with respect to the surface 200 of the target, joint parts 90 respectively connected to the structural units 100, and a binding part 91 configured to bind the joint parts 90 respectively connected to the plurality of structural units 100 to each other. FIGS. 1A, 1B, and 2 show an example including two structural units 100.

The structure according to the present invention is invented utilizing a phenomenon of directional adhesion, which exhibits a high peel strength in only one direction.

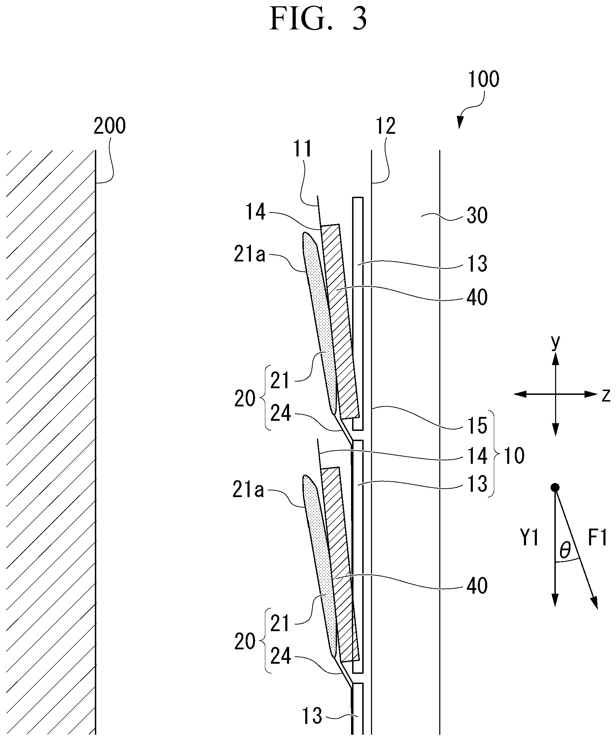

In the structural unit 100, similar to the adhesive structure disclosed in Patent Document 1, the adhesive strength changes sensitively depending on the direction of a force applied to the structural unit 100 when it is attached (adhered) to the target. For example, as shown in FIG. 1A, when the structural unit 100 is adhered to the surface 200, the adhesive force increases as a direction F1 of a force applied to the structural unit 100 becomes closer to an in-plane direction Y1 of the surface 200 (direction Y1 from a movable end 20b to a fixed end 20a of an attachment/detachment part 20 provided in the structural unit 100, which will be described below, refer to FIGS. 2 and 3). Here, the smaller of the angles formed by the direction Y1 and the force direction F1 is regarded as an angle θ. When the angle θ is, for example, 20° to 30° or smaller, or 0° (that is, the direction Y1 coincides with the direction F1), the structural unit 100 exhibits a higher adhesive force. Further, if the angle θ exceeds 20 to 30°, for example, the adhesive force decreases sharply, and the structural unit 100 can be detached from the surface 200 with a smaller force. The arrow (F1) in FIG. 1A indicates only the "direction" of a force, and the length of the arrow is unrelated to the magnitude of a force.

The characteristics that the adhesive strength changes sensitively depending on the force direction F are important characteristics from the viewpoint of ease of attachment and detachment of the structural unit 100. However, on the other hand, it also means that the usable angle range of the adhesive structure 1000 is limited to the range of angles exhibiting a strong adhesive force (for example, θ in FIG. 1A is 30° or smaller). Hence, the inventor of this application has studied expanding the usable range of the structure 1000, thereby arriving at the invention of this application.

The structure 1000 of the embodiment of the invention of this application includes the binding part 91 configured to bind the joint parts 90 to each other such that the structural units 100 do not detach from the surface 200 when being adhered to the surface 200. For example, it is assumed that an object M1 is suspended from a ceiling (surface 200) using the structure 1000 (refer to FIG. 1A). If the object M1 is suspended from the joint parts 90 without binding the joint parts 90, a load is applied to the structural unit 100 in the direction of gravity (direction perpendicular to the ceiling 200) (θ in FIG. 1A is 90°), causing the structural unit 100 to detach from the surface 200. In the present embodiment, by binding the joint parts 90 to each other with the binding part 91, even if a load is applied to the joint parts 90, it is possible to curb application of a force to each of the structural units 100 in a direction in which detachment is made easier (for example, θ=90°). As a result, the adhesive force to the surface 200 can be maintained. Accordingly, the object M1 can be suspended from the ceiling (surface 200) using the structure 1000 of the present embodiment. Further, as shown in FIG. 1B, the structure 1000 can be readily detached from the ceiling (surface 200) by unbinding the joint parts 90 from the binding part 91.

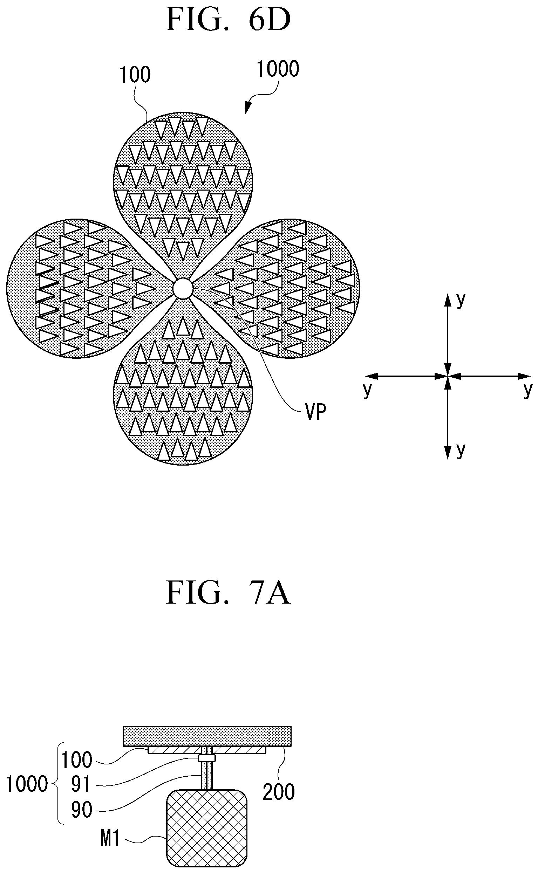

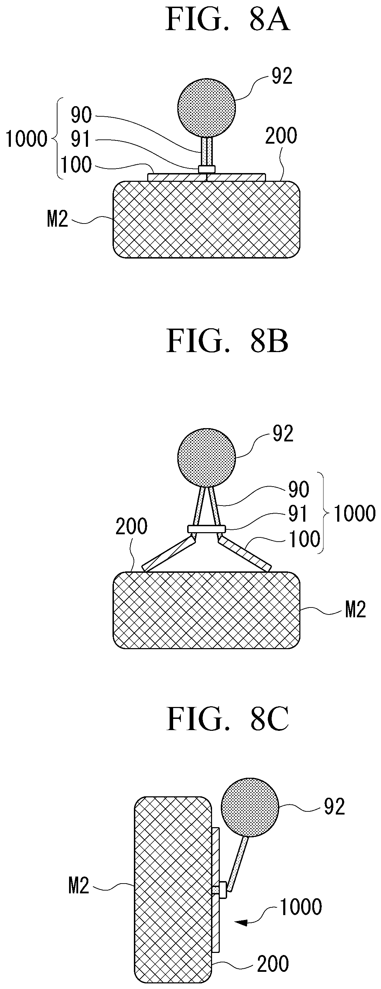

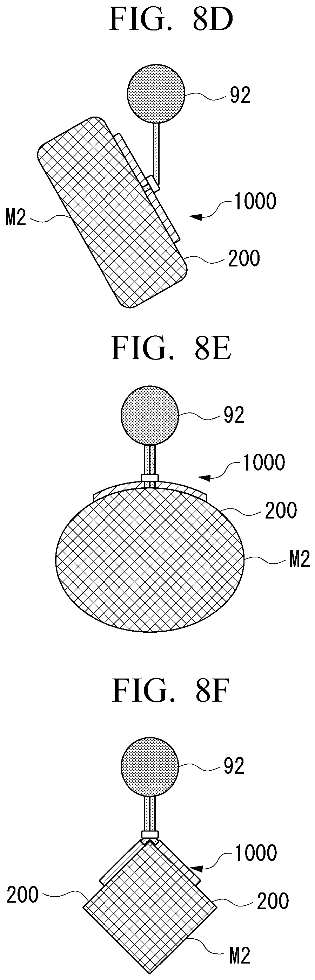

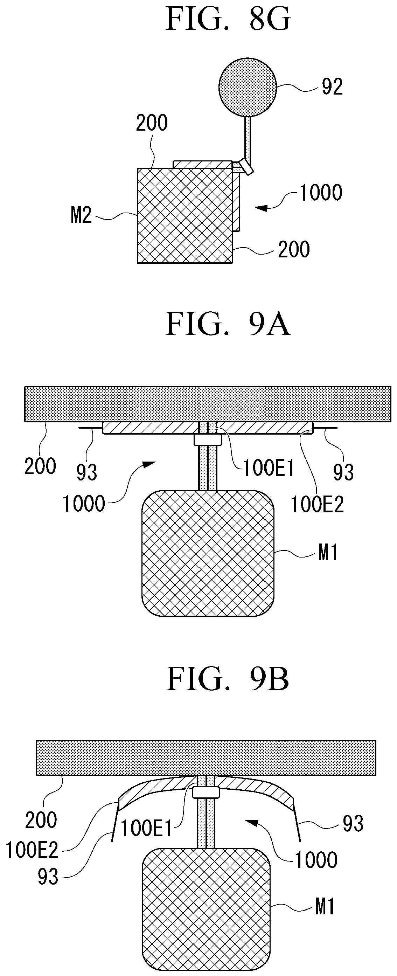

In this manner, the structure 1000 of the present embodiment has a very simple configuration, and yet it has a wide usable range (for example, a range of directions of a load with respect to the surface 200 which can be applied to the structure 1000 in a state in which the structure 1000 is adhered to the surface 200). Further, the structure 1000 has a strong adhesive force to the surface 200 of an object and can be readily detached (peeled off). In addition, unlike thumbtacks, nails, and the like, the structure 1000 does not pose a risk of damaging the wall surface 200. The structure 1000 can be utilized as a suspender for suspending the object M1 from the surface 200 (refer to FIGS. 7A to 7G), and can also be utilized as a suspender for suspending an object M2 having the surface 200 (refer to FIGS. 8A to 8G). In addition, the suspender (structure 1000) shown in FIGS. 8A to 8G can also be utilized as a carrying aid for the target M2.

Hereinafter, details of each constituent member of the structure 1000 will be described.

### 1. Structural unit

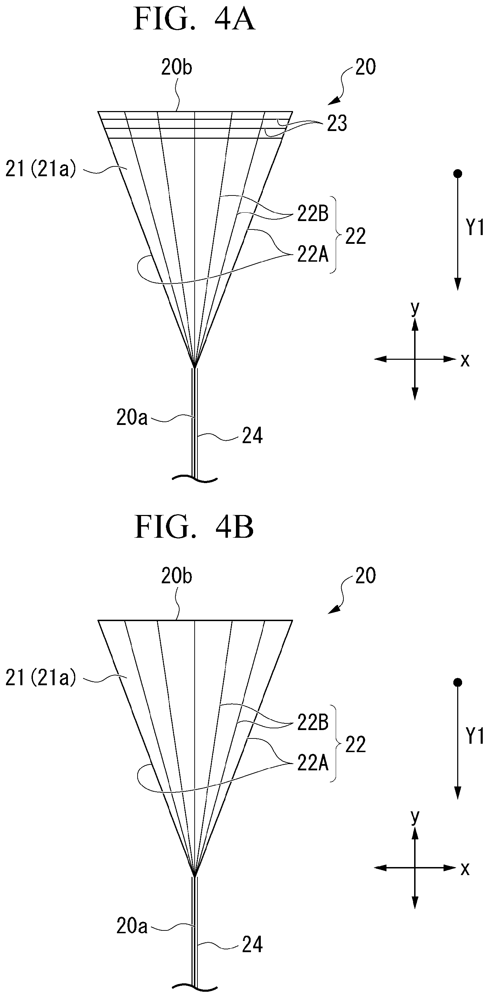

The structural unit 100 is attachable and detachable with respect to the surface 200 of an object (adherend). As shown in FIGS. 2 to 4A and 4B, the structural unit 100 has a support body 10, a plurality of attachment/detachment parts 20 supported by the support body 10 and attachable and detachable with respect to the surface 200, and a buffer part 40 corresponding to at least one of the plurality of attachment/detachment parts 20. In the following description, when the structural unit 100 is adhered to the surface 200, a direction intersecting the surface 200 (the z direction indicated in FIG. 3, and a direction perpendicular to the page of FIG. 2) is defined as a "stacking direction", a direction orthogonal to the stacking direction z is defined as a "disposition direction" (the y direction indicated in FIGS. 2 and 3), and a direction orthogonal to the stacking direction and the disposition direction is defined as a "width direction" (the x direction indicated in FIGS. 2 and 3).

Hereinafter, each constituent portion of the structural unit 100 will be described.

### <Support body>

The support body 10 has a facing side 11, and a back side 12 positioned on a side opposite to the facing side 11 in the stacking direction (z direction). The facing side 11 is a side disposed in a manner of facing the surface 200 when the structural unit 100 is adhered to the surface 200. The shape and the size (the thickness, the areas of the facing side 11 and the back side 12, and the like) of the support body 10 are not particularly limited, and can be suitably designed depending on the intended use of the structure 1000. For example, the support body 10 may have a flat plate shape or a sheet shape, may have a three-dimensional shape with a curved surface, or may have a complex shape thereof. In addition, the support body 10 may be a fabric such as a cloth (textile), a nonwoven fabric, or a knitted fabric, and may be a single layer body or a multi-layered body (stacked body). If the support body 10 is a fabric, it becomes easier to align and fix a plurality of attachment/detachment parts 20 on the support body 10 by sewing or the like. In addition, it is preferable that the support body 10 have softness and/or flexibility so that it can readily follow the unevenness (surface roughness), the curvature, or the like of the surface 200.

The material of the support body 10 is not particularly limited, and examples thereof include organic materials, inorganic materials, and composite materials thereof. The organic materials are not particularly limited, and examples thereof include resins. Examples of the resins include polyamide resins (for example, nylon), polyethylene resins, polyester resins such as polyethylene terephthalate (PET), polycarbonate resins, (meth)acrylic resins, epoxy resins, polyurethane resins, polyolefin resins, cellulose derivatives, silicone resins, and polyvinyl alcohol (PVA). The support body 10 may be a foam of any of these resins. In addition, when a fabric is used for the support body 10, the material is not particularly limited, and natural fibers (for example, cotton, linen, silk, and animal fibers such as wool), chemical fibers (for example, the resins described above, such as nylon), or blended fabrics thereof can be used. The support body 10 may be composed of a single material or may be composed of a plurality of materials.

### <Attachment/detachment part>

The plurality of attachment/detachment parts 20 are supported by the facing side 11 of the support body 10. The attachment/detachment part 20 has the fixed end 20a fixed to the support body 10, and the movable end 20b configured to be movable (for example, pivotable) in a direction away from the support body 10 with the fixed end 20a as a rotation axis (fulcrum, rotation center). The fixed end 20a is an end portion on one side in the disposition direction (y direction), and the movable end 20b is an end portion on the other side in the disposition direction. The disposition of the plurality of attachment/detachment parts 20 is not particularly limited, and yet they are not randomly disposed. As described above, it is preferable that they be disposed with directionality in one direction (disposition direction y) with the fixed end 20a toward one side in the disposition direction y and with the movable end 20b toward the other side in the disposition direction y.

Each of the plurality of attachment/detachment parts 20 is configured to have a shaft 24, and an adhesive film 21 provided at the end of the shaft 24. Each of the attachment/detachment parts 20 is disposed with the shaft 24 toward one side in the disposition direction (y direction) and with the adhesive film 21 toward the other side. The shaft 24 is formed by a fused part in which parts of at least two (that is, multiple) first skeletal members 22 are fused together. Further, the adhesive film 21 is supported by non-fused parts of the plurality of first skeletal members 22. The first skeletal members 22 connect the fixed ends 20a and the movable ends 20b of the attachment/detachment parts 20. With such a structure, the plurality of attachment/detachment parts 20 can be efficiently manufactured.

When there are two first skeletal members 22, they are disposed at both ends of the adhesive film 21 in the width direction (x direction) (22A in FIGS. 4A and 4B). When there are three or more first skeletal members 22, one or more first skeletal members 22B are further provided between the first skeletal members 22A at both ends. The number of first skeletal members 22 is not particularly limited as long as it is two or more. The first skeletal members 22 may be designed on the basis of the intended use or the like of the structural unit 100. However, from the viewpoint of enhancing the strength of the attachment/detachment parts 20, it is preferable to provide three or more first skeletal members 22, and there may be 3 to 30 first skeletal members, for example. In addition, the first skeletal members 22 may have a linear shape, a curved shape, or a combination thereof.

In order to prevent the attachment/detachment parts 20 from coming off from the structural unit 100 due to repeated attachment and detachment of the structural unit 100, it is preferable that the fused shaft 24 be fixed to the support body 10. For example, when a fabric stacked body is used as the support body 10, the shaft 24 may be folded between the layers of the stacked body, and the shaft 24 may further be sewn to the support body 10. In addition, it is preferable that the shaft 24 be fixed to the support body 10 in a state of extending in the disposition direction (y direction) and that a plurality of shafts 24 be substantially parallel to each other.

A material similar to that of the "structure" disclosed in Patent Document 1, which has been previously filed by the inventor of this application, can be used for the plurality of attachment/detachment parts 20. For example, a material similar to the flexible material constituting the shaft material of Patent Document 1 can be used for the first skeletal members 22 of the present embodiment, and a material similar to that of the adhesive part of Patent Document 1 can be used for the adhesive film 21 of the present embodiment. The contents of Patent Document 1 are incorporated in this specification by reference.

It is preferable that the first skeletal members 22 of the present embodiment be made of a flexible material. Accordingly, they can deform in accordance with the surface shape of the surface 200 and exhibit an excellent adhesive force.

In this specification, a flexible material refers to a material which is elastically deformable by the stress applied when being pressed against the surface 200. In other words, whether a material has flexibility can be defined by whether it is elastically deformable in relation to the stress required for initial adhesion between the attachment/detachment parts 20 and the surface 200. Since the attachment/detachment parts 20 have skeletal members made of a flexible material, when the attachment/detachment parts 20 are adhered to the surface 200, the skeletal members deform in accordance with the surface structure of the surface 200. For this reason, the attachment/detachment parts 20 have excellent conformability. In addition, the adhesive film 21 is more likely to be pressed against the surface 200 due to repulsion forces of the skeletal members. As a result, the attachment/detachment parts 20 have more excellent adhesiveness to the surface 200.

Known materials can be used as the flexible material. Examples of the flexible materials include organic materials, inorganic materials, and composites thereof.

The inorganic materials are not particularly limited, and examples thereof include metals and glass. The organic materials are not particularly limited, and examples thereof include resins. The resins are not particularly limited, and examples thereof include olefin-based resins, acrylic-based resins, styrene-based resins, halogen-containing resins, vinyl ester-based resins, polyester-based resins, polyamide-based resins, polycarbonate-based resins, polyurethane-based resins, poly(thio)ether-based resins, polysulfone-based resins, polyetherketone-based resins, polyimide-based resins, polyacetal-based resins, cellulose ester-based resins (cellulose acetate or the like), and thermoplastic elastomers.

Examples of the poly(thio)ether-based resins include polyphenylene ether-based resins and polysulfide-based resins such as polyphenylene sulfide-based resins. Examples of the polysulfone-based resins include polysulfone resins and polyethersulfone-based resins. Examples of the polyetherketone-based resins include polyphenylene ether ketone-based resins. Examples of the polyimide-based resins include polyetherimide-based resins, polyamide imide-based resins, and polybenzimidazole-based resins. Examples of the cellulose ester-based resins include cellulose acetate. Examples of the thermoplastic elastomers include polyamide-based elastomers such as polyamide-polyether block copolymers, polyester-based elastomers, polyurethane-based elastomers, polystyrene-based elastomers, polyolefin-based elastomers, and fluorine-based thermoplastic elastomers.

The organic materials may contain one kind of resin alone or may contain two or more kinds of resins.

In addition, fibers can be used as the flexible material. Examples of the fibers include nylon fibers (tensile strength: 4.2 to 5.6 cN/dtex, elongation ratio: 28% to 45%), polyethylene fibers (tensile strength: 4.4 to 7.9 cN/dtex, elongation: 8% to 35%), polyester fibers (tensile strength: 4.6 to 7.3 cN/dtex, elongation: 11% to 43%), and acrylic fibers (tensile strength: 2.2 to 4.4 cN/dtex, elongation: 25% to 50%). The first skeletal members 22 may be composed of a single material or may be composed of two or more kinds of materials.

The adhesive film 21 of the present embodiment preferably contains a pressure-sensitive adhesive, and examples thereof include acrylic-based resins, urethane-based resins, rubber-based resins, silicone-based resins, and resins which combine these structures. In addition, polyether polymers, polyester, polyamide, chlorine-based polymers, or fluorine-based polymers may be used as the material for the adhesive film 21 of the present embodiment. The adhesive film 21 may be composed of a single material or may be composed of two or more kinds of materials.

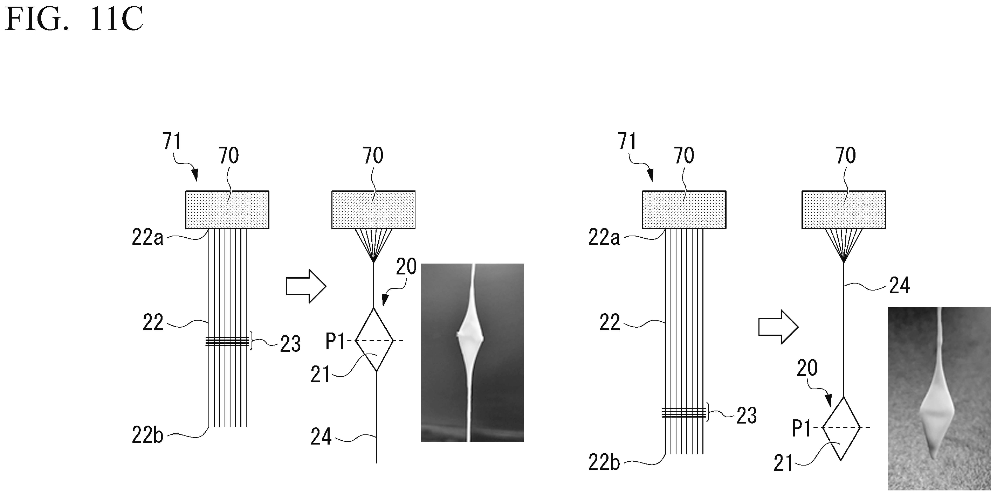

As shown in FIG. 4A, the attachment/detachment part 20 may further have at least one second skeletal member 23 intersecting the first skeletal members 22. A material similar to that of the first skeletal members 22 can be used for the second skeletal member 23. By having the second skeletal member 23, the strength of the attachment/detachment part 20 can be further enhanced. Simultaneously, the degree of freedom in the shape of the adhesive film 21 can be increased. For example, as will be described below in detail, by having the second skeletal member 23, the adhesive film 21 having a rhombic shape, a heart shape (refer to FIGS. 11C to 11E), or the like can be efficiently produced. The number of second skeletal members 23 is not particularly limited, and may be designed on the basis of the intended use or the like of the structure 1000. However, for example, it may be 1 to 100. In addition, as shown in FIG. 4B, the attachment/detachment part 20 may not have the second skeletal member 23, and the adhesive film 21 may be supported only by the first skeletal members 22. The form shown in FIG. 4B has a simple structure and is highly durable (is less prone to breakage).

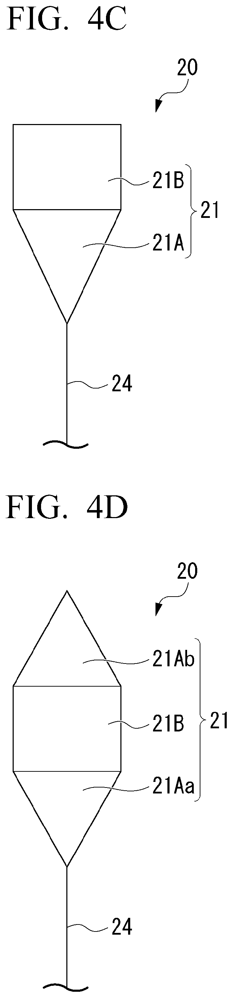

As shown in FIG. 4C, the adhesive film 21 may be configured to have a triangular portion 21A and a rectangular portion 21B disposed in this order in the direction of the shaft 24. In this configuration, since the length in the direction of the shaft becomes longer than the adhesive film shown in FIGS. 4A and 4B, it is preferable to enhance the strength of the attachment/detachment part 20 by increasing the number of second skeletal members 23.

In the adhesive film 21 shown in FIG. 4C, the rectangular portion 21B can be further provided in the adhesive film shown in FIGS. 4A and 4B to increase its surface area and improve the adhesive force, but this makes it more difficult for the adhesive film to detach. Therefore, it is preferable to select whether to use an adhesive film having a rectangular portion or use an adhesive film having no rectangular portion depending on the intended use.

In a preliminary experiment, in the case of the adhesive film 21 shown in FIG. 4C, the adhesive force was maximized when the ratio of length to width (length of rectangular portion/width) was around 1. Therefore, it is preferable to use it with the ratio of length to width in the range of 0.1 to 1.5.

The adhesive film 21 shown in FIG. 4D is another example of a configuration having a rectangular portion and is configured to have the rectangular portion 21B between triangular portions 21Aa and 21Ab constituting a rhombic shape as shown in FIG. 11C.

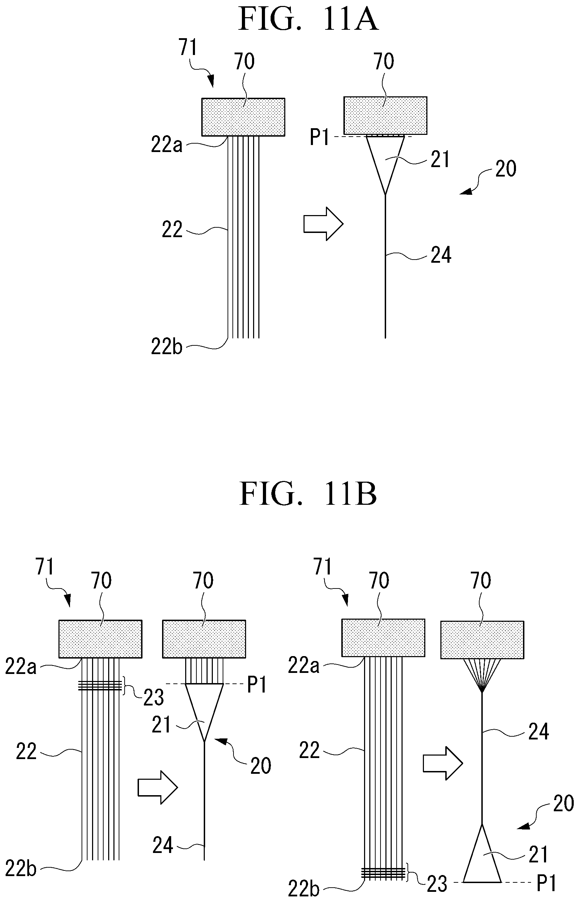

The adhesive film 21 has an adhesive surface 21a that is attachable and detachable with respect to the surface 200. The shape of the adhesive surface 21a is not particularly limited. However, it is preferable that the width in the width direction (x direction) continuously increases from the end portion on one side in the disposition direction (y direction) toward the other side up to a predetermined position (for example, up to P1 shown in FIGS. 11A to 11E). For example, when peeling of the adhesive film 21 begins from the end portion on one side in the disposition direction (y direction) where the fixed end 20a is present, detachment (peeling) can be achieved with a smaller force by reducing the width of the end portion of the adhesive surface 21a on one side in the disposition direction (y direction). In addition, by continuously increasing the area in the disposition direction y, the area of the adhesive surface 21a can be secured so that a higher adhesive force can be maintained. Examples of the shapes of such an adhesive surface 21a include a triangular shape (spatula shape), a fan shape, a trapezoidal shape, a semicircular shape, a circular shape, and a polygonal shape such as a rhombic shape, and a heart shape (refer to FIGS. 11A to 11E). From the viewpoint of further enhancing the effect, it is more preferable that the width of the adhesive surface 21a in the width direction (x direction) continuously increase from the end portion on one side in the disposition direction (y direction) to the end portion on the other side. Examples of the shapes of such an adhesive surface 21a include a triangular shape (spatula shape), a fan shape, a trapezoidal shape, and a semicircular shape.

The fixed end 20a may be provided on the adhesive film 21 or may be provided on the shaft 24. When the fixed end 20a is provided on the adhesive film 21, the entire shaft 24 is fixed to the support body 10, and only the adhesive film 21 is configured to be movable. Meanwhile, when the fixed end 20a is provided on the shaft 24, a portion of the shaft 24 present on the adhesive film 21 side relative to the fixed end 20a (which will hereinafter be referred to as a "movable portion of the shaft 24") is not fixed to the support body 10 and is configured to be movable together with the adhesive film 21. However, if the movable portion of the shaft 24 is excessively long, there is a risk of increased variation in undulation, direction, or the like among a plurality of adhesive surfaces 21a. It is preferable that a length (L1) of the movable portion of the shaft 24 is sufficiently shorter than a length (L2) of the adhesive film 21 in the disposition direction (y direction). For example, the ratio (L1/L2) is preferably 0 to 0.5.

The size (the thickness, the width, and the like of the adhesive film 21), the number, and the like of the attachment/detachment part 20 are not particularly limited, and can be suitably designed depending on the intended use of the structure 1000. For example, they may be set within the following ranges:
the width of the adhesive surface 21a (maximum width in the x direction): 1 mm to 20 mm;
the thickness of the adhesive film 21: 0.1 mm to 5 mm;
the thickness of the first skeletal member 22: 50 µm to 600 µm;
the thickness of the second skeletal member 23: 50 µm to 600 µm;
the thickness of the shaft 24: 0.1 mm to 5 mm; and
the number of attachment/detachment parts 20 provided in the support body 10: 1 to 300.

### <Buffer part>

The buffer part 40 is a soft and/or elastic member corresponding to at least one of the plurality of attachment/detachment parts 20. In the present embodiment, the buffer part 40 is disposed between the corresponding attachment/detachment part 20 and the back side 12 of the support body 10 in the stacking direction z. When the structural unit 100 is adhered to the surface 200, a pressing force is applied from an action part 30 (which will be described below) toward the attachment/detachment part 20, that is, toward the surface 200 via the buffer part 40 so that the adhesive surface 21a is adhered to the surface 200. At this time, by having the buffer part 40, the adhesive surface 21a of the attachment/detachment part 20 can be sufficiently brought into close contact with the surface 200.

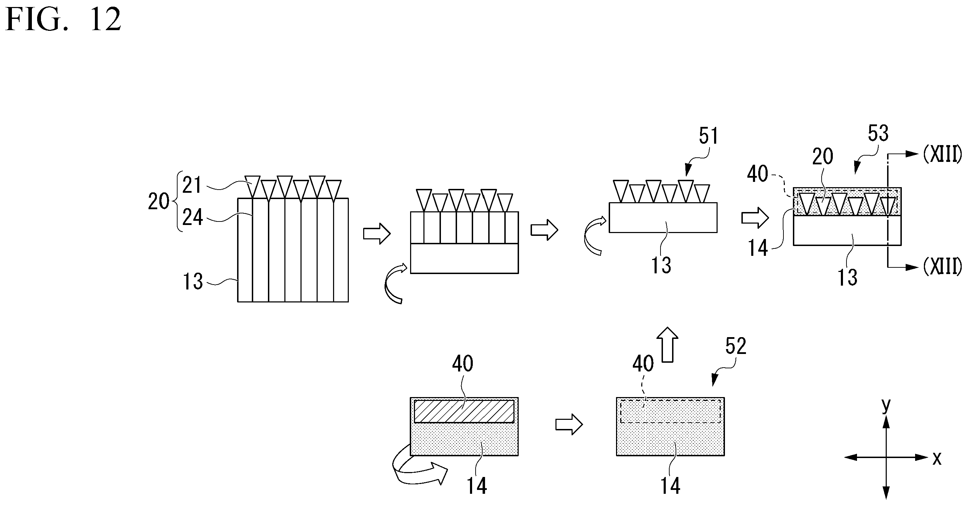

The position of the buffer part 40 is not otherwise particularly limited, as long as it is disposed between the corresponding attachment/detachment part 20 and the back side 12 of the support body 10 in the stacking direction z. For example, as shown in FIG. 3, the buffer part 40 may be embedded inside the support body 10, which is a stacked body (between layers of the stacked body, that is, between the facing side 11 of the support body 10 and the back side 12). In addition, the buffer part 40 may be positioned between the corresponding attachment/detachment part 20 and the facing side 11 of the support body 10 or may be positioned between the back side 12 of the support body 10 and the action part 30. In addition, the number of attachment/detachment parts 20 corresponding to one buffer part 40 is not particularly limited. For example, as shown in FIG. 12, one buffer part 40 may correspond to a plurality of attachment/detachment parts 20 (six attachment/detachment parts 20 in FIG. 12). In addition, a plurality of buffer parts 40 may be present so as to correspond to the plurality of attachment/detachment parts 20 on a one-to-one basis, or one common buffer part 40 may be provided so as to correspond to all the attachment/detachment parts 20.

The material of the buffer part 40 is not particularly limited as long as it has softness and/or elasticity. Examples thereof include resin (polymer) materials such as rubber, foam, and gel, and gel is preferable among these. Examples of the gel include urethane gel and silicone gel. From the viewpoint of achieving higher adhesiveness, the buffer part 40 is preferably made of urethane gel and preferably has an Asker C hardness of 0 to 15 or 0 to 7.

The size of the buffer part 40 is not particularly limited. However, from the viewpoint of having higher adhesiveness, when viewed in the stacking direction z, it is preferable that the size (area) be large enough to cover all the corresponding attachment/detachment parts 20. For example, the thickness in the stacking direction z is preferably 0.1 mm to 10 mm or 0.5 mm to 2 mm.

### <Action part>

The action part 30 is disposed in a manner of facing the back side 12 of the support body in the stacking direction (z direction). The action part 30 is a portion applying a force to be exerted to (acting on) the plurality of attachment/detachment parts 20 is applied when the structural unit 100 is adhered to the surface 200. From the viewpoint of efficiently transmitting a force to the plurality of attachment/detachment parts 20, it is preferable that the action part 30 include a plate-shaped body which is disposed so as to cover all the attachment/detachment parts 20 when viewed in the stacking direction (z direction). The material of the action part 30 (typically, a plate-shaped body) is not particularly limited, and various kinds of plastic (resin, polymer), wood, paper (for example, cardboard), metal, or the like can be used. Since the action part 30 is a portion to which a force is applied from the outside when the structural unit 100 is adhered to the surface 200, it is preferable that the action part 30 be disposed on the outermost side of the structural unit 100 in the stacking direction (z direction) (at the position farthest from the surface 200 in the z direction when the structural unit 100 is adhered to the surface 200).

In the structural unit 100 of the present embodiment, the action part 30 is an arbitrary member. In the case in which the action part 30 is not provided, when the structural unit 100 is adhered to the surface 200, for example, the structural unit 100 is pressed from the back side 12 of the support body 10 toward the surface 200.

### <Other constituent members>

The structural unit 100 of the present embodiment may be configured to have only the support body 10, a plurality of attachment/detachment parts 20, and the buffer part 40 and may include other members such as the action part 30 within a range exhibiting the effects of the present invention. For example, a reinforcement material or the like for enhancing the strength of the structural unit 100 may be provided between the support body 10 and the action part 30.

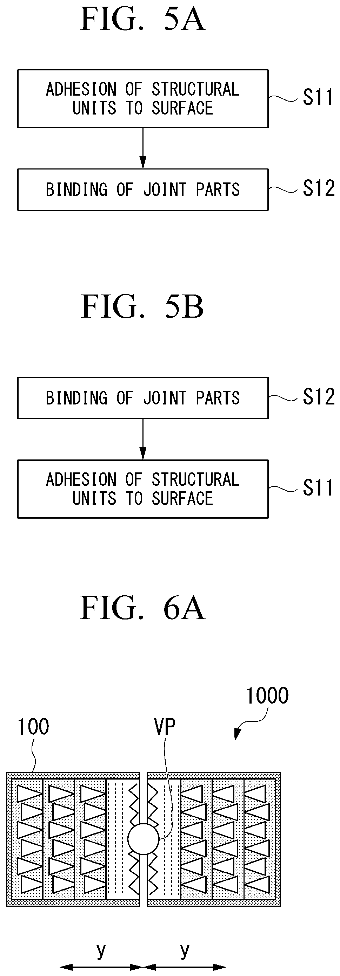

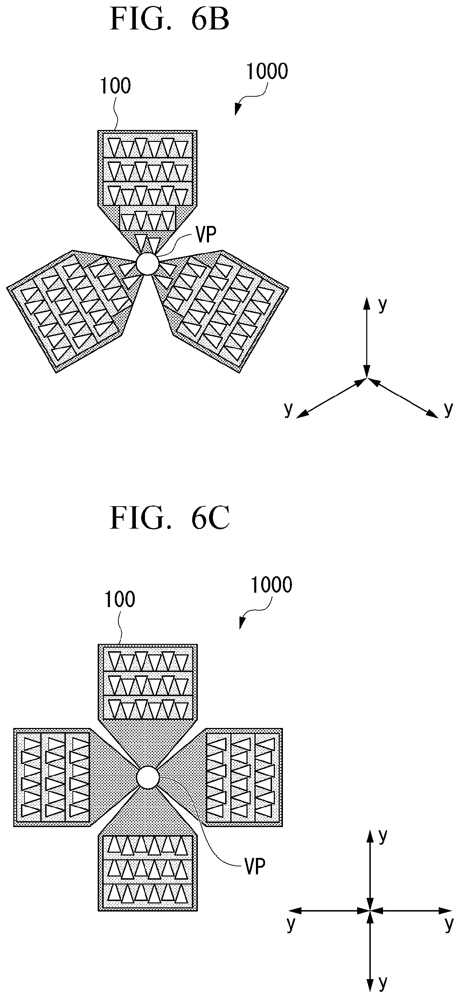

The structure 1000 of the present embodiment includes a plurality of structural units 100 described above, that is, two or more structural units 100. FIGS. 1A, 1B, and 2 show a form in which there are two structural units 100. FIGS. 6A to 6D show forms in which there are two to four structural units 100. The number of structural units 100 is not particularly limited as long as it is two or more and can be suitably designed depending on the intended use of the structure 1000. For example, the number of structural units 100 provided in the structure 1000 may be 20 or more, 20 to two, six to two, or two. In addition, the configurations, the sizes, and the like of the plurality of structural units may be the same or may be different. From the viewpoint of improving the adhesive force of the structure 1000, it is preferable that the plurality of structural units 100 have the same configuration and the same size.

### <Operational effects of structural unit>

The structural unit 100 described above is an assembly of a plurality of attachment/detachment parts 20 and naturally exhibits a higher adhesive force to the surface 200 than when one attachment/detachment part 20 is used. However, it is not possible to obtain the adhesive force which should be obtained by calculation for the assembly by simply increasing the number of attachment/detachment parts 20. The cause of this is presumed to be that variations occur in undulation, direction, and the like of the adhesive surface 21a among the attachment/detachment parts 20 constituting the assembly, and as a result, the adhesion state of the adhesive surface 21a with respect to the surface 200 varies. Based on this presumption, the inventor of this application conducted intensive studies in order to resolve performance deterioration of the attachment/detachment part 20 occurring in the assembly, and as a result, arrived at the structural unit 100 of the present embodiment having the configuration described above. Hereinafter, operational effects of the structural unit 100 of the present embodiment will be described.

First, the structural unit 100 has the buffer part 40, which thereby absorbing variations in undulation, direction, or the like between the plurality of adhesive surfaces 21a and also absorbing unevenness (surface roughness) on the surface 200. Accordingly, the variations in the adhesion state of the adhesive surface 21a to the surface 200 are suppressed, and the adhesive force is improved.

Further, in the structural unit 100, the plurality of shafts 24 are disposed in alignment substantially parallel to each other and fixed to the support body 10 in the disposition direction y. Accordingly, variations in undulation, direction, or the like between the adhesive surfaces 21a can be suppressed more efficiently. In addition, by disposing the attachment/detachment parts 20 in alignment with directionality, the direction of a force (direction of a load) applied to the attachment/detachment parts 20 can be aligned during adhesion, and removal (detachment, peeling). By aligning the direction of a force between the plurality of attachment/detachment parts 20, the structural unit 100 can exhibit a stronger adhesive force as an assembly of the adhesive structure, and at the same time, it can be readily detached from the surface 200.

### 2. Joint part

The joint parts 90 are string-shaped (tape-shaped) long members respectively connected to the plurality of structural units 100. The plurality of structural units 100 are joined by binding the joint parts 90 with the binding part 91. For example, the joint parts 90 are respectively connected to the support bodies 10 and/or the action parts 30 of the structural units 100.

The material of the joint parts 90 is not particularly limited, and examples thereof include organic materials, inorganic materials, and composite materials thereof. However, it is preferable to use a material having appropriate softness and/or flexibility such that the joint parts can be readily bound at the binding part 91. In addition, a load corresponding to the intended use of the structure 1000 is applied to the joint parts 90. For example, as shown in FIGS. 1A and 7A to 7G, when the object M1 is suspended from the surface 200 using the structure 1000, the object M1 is attached to the bound joint parts 90. In addition, for example, as shown in FIGS. 8A to 8G, when the target M2 (adherend) is lifted using the structure 1000, the load of the target M2 is applied to the bound joint parts 90. In this manner, it is preferable to suitably select a material for the joint parts 90 having a strength tolerable for a load corresponding to the intended use of the structure 1000.

The organic materials that can be used for the joint parts 90 are not particularly limited, and examples thereof include resins. Examples of the resins include polyamide resins (for example, nylon), polyethylene resins, polyester resins such as polyethylene terephthalate (PET), polycarbonate resins, (meth)acrylic resins, epoxy resins, polyurethane resins, polyolefin resins, cellulose derivatives, silicone resins, and polyvinyl alcohol (PVA). In addition, natural fibers (for example, cotton, linen, silk, and animal fibers such as wool), chemical fibers (for example, the resins described above, such as nylon), or blended fabrics thereof can be used for the joint parts 90. Examples of the inorganic materials that can be used for the joint parts 90 include metal wire and metal chain. The joint parts 90 may be composed of a single material or may be composed of a plurality of materials.

The sizes (widths (thicknesses), lengths, and the like) of the joint parts 90 are not particularly limited, and may be suitably designed depending on the intended use of the structure 1000.

For example, the joint part 90 may be provided at an end portion 100E1 on one side in the disposition direction y (a side of the shafts 24 in the attachment/detachment parts 20 disposed parallel to the disposition direction y) in each of the structural units 100. The end portion 100E1 is an end portion on the downstream side in the direction Y1 from the movable end 20b to the fixed end 20a of the attachment/detachment part 20 in the disposition direction y. As shown in FIGS. 1A and 2, when the structure 1000 is adhered to the surface 200, the plurality of structural units 100 are disposed around the binding part 91 with the end portion 100E1 each provided with the joint part 90 (end portion on one side in the disposition direction y) toward the binding part 91. Accordingly, it becomes easier to bind the joint parts 90. In addition, for example, the joint part 90 may be provided at a central part in the width direction (x direction) in each of the structural units 100. Accordingly, a risk of detachment of the structure 1000 from the surface 200 can be further reduced when a load is applied to the joint parts 90.

In addition, an end portion of one joint part 90 may be connected to an end portion of the other joint part 90 or end portions of all the joint parts 90 may be connected. For example, as shown in FIGS. 7A to 7G, when the object M1 is suspended, hooks or the like for suspending the object M1 may be provided in the connected joint parts 90. In addition, for example, as shown in FIGS. 8A to 8G, when the target M2 (adherend) is lifted, a gripping part 92 may be provided in the connected joint parts 90 to make it easier to lift the target M2. If the joint parts 90 are connected, the plurality of structural units 100 are connected via the joint parts 90 and form a single unit, which has an advantage of making handling easier.

### 3. Binding part

The form of the binding part 91 does not particularly matter as long as it can bind the joint parts 90 connected to the plurality of structural units 100 to each other.

For example, the binding part 91 may be formed by binding the joint parts 90 to each other. In this case, the binding part 91 is constituted by portions (knots) of a plurality of joint parts 90. The binding part 91 formed by joining the joint parts 90 to each other can also be readily unbound (unknotted), and since the binding part 91 (separate member) is unnecessary, the number of components can be reduced.

In addition, naturally, the binding part 91 may be a separate member from the joint parts 90. For example, the binding part 91 may be a long member such as a string, a tape, a band, a wire, or a thread, and can be used to bundle and bind the joint parts 90. In addition, for example, the binding part 91 may be a pinch, a clip, or the like, or may be a member having one or two penetration holes, for example, formed therein, through which the joint parts 90 (for example, strings) are passed. Examples of the members having penetration holes formed therein include cord stoppers (cord locks or string stoppers, for example, spring type).

In the present embodiment, detachment of the structure 1000 from the surface 200 can be curbed by binding the plurality of joint parts 90 to each other with the binding part 91, and the structure 1000 can be readily detached from the surface 200 by unbinding the joint parts 90. Therefore, the binding part 91 is preferably a member capable of binding the joint parts 90 to each other and readily unbinding (capable of releasing) them.

However, for example, when the structural unit 100 includes a detachment knob 93 which will be described below (refer to FIGS. 9A to 9D), the structure 1000 can be detached from the surface 200 without unbinding the joint parts 90 by applying a load to the structure 1000 via the detachment knobs 93 (for example, by pulling the detachment knobs 93 in a direction away from the surface 200). In addition, depending on the intended use of the structure 1000, the structure 1000 can also be detached from the surface 200 by destroying (cutting) the binding part 91 (or the joint parts 90). Therefore, in the present embodiment, the binding part 91 may not have a configuration capable of readily unbinding the joint parts 90 to each other.

### 4. Others

In the present embodiment, the structure 1000 may be constituted only by a plurality of structural units 100, the joint parts 90, and the binding part 91 described above, or may include other members such as the detachment knobs 93 and the gripping part 92, as necessary.

### [Method for using structure]

For example, the structure 1000 of the present embodiment may be used by a method of use including the following steps (refer to FIG. 5A). The structure 1000 can be adhered to the surface 200 of an object by this method of use.

Step S11: adhering the plurality of structural units 100 to the surface 200 in a state in which the plurality of structural units 100 are disposed around a virtual binding point VP set on the surface 200 with the shaft 24 side of the attachment/detachment parts 20 toward the virtual binding point VP; and

Step S12: binding the joint parts 90 connected to the plurality of structural units 100 to each other with the binding part 91 such that the plurality of structural units 100 do not detach from the surface 200

### <Step S11>

First, the plurality of structural units 100 are adhered to the surface 200 of an object. Specifically, the adhesive films 21 of the attachment/detachment parts 20 are adhered to the surface 200. At this time, the plurality of structural units 100 are disposed around the virtual binding point with the shaft 24 side of the attachment/detachment parts 20 toward the virtual binding point VP set on the surface 200. Therefore, as shown in FIG. 2, each of the structural units 100 is disposed with the end portion 100E1 on one side in the disposition direction y (downstream side of the attachment/detachment parts 20 in the direction Y1 from the movable end 20b to the fixed end 20a) toward the binding part 91. The end portion 100E1 of each of the structural units 100 is provided with the joint part 90.

From the viewpoint of improving the adhesive force of the structure 1000, it is preferable that the plurality of structural units 100 be disposed in a balanced manner (more evenly) around the virtual binding point VP. For example, as shown in FIGS. 1A, 1B, and 2, when two structural units 100 are disposed on the same plane, it is preferable that the disposition directions y of the structural units 100 (extension directions of the shafts 24) be nearly parallel to each other. In addition, for example, when n structural units are disposed on the same plane, it is preferable that the angle formed between the disposition direction y of one structural unit 100 (which will be referred to as a first structural unit) and the disposition direction y of another structural unit 100 adjacent to the first structural unit (which will be referred to as a second structural unit) be nearly (360/n) degrees, and for example, it may be (360/n)±10°. For example, the angle is preferably 180±10° when there are two structural units 100, is preferably 120±10° when there are three of them, and is preferably 90±10° when there are four of them (refer to FIGS. 6A to 6D).

In addition, the plurality of structural units 100 may come into contact with each other at the virtual binding point VP (for example, FIGS. 6A to 6D), or may be separated from each other (for example, FIG. 2). When the plurality of structural units 100 are separated, it is preferable that the distances (shortest distances) between the virtual binding point VP and the respective structural units 100 be substantially equivalent to each other.

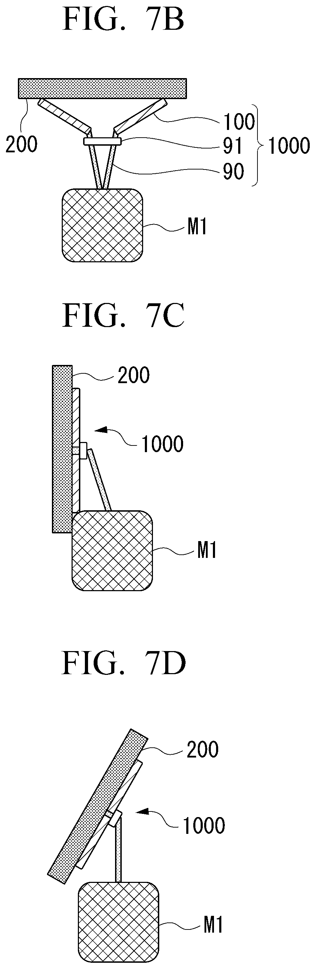

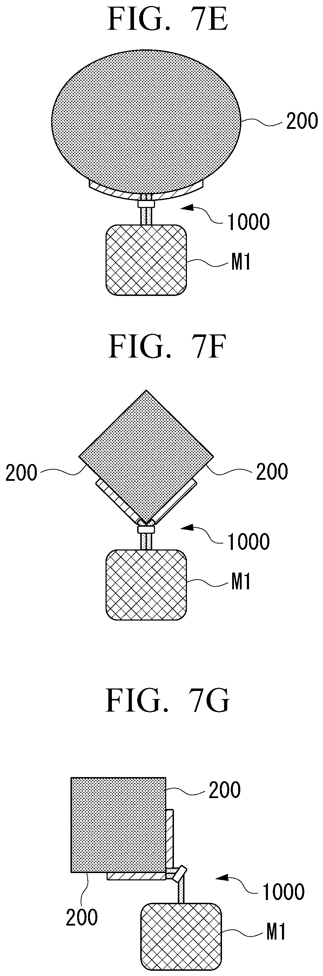

The shape of the surface 200 (adherend target) is not particularly limited. However, from the viewpoint of achieving a stronger adhesive force, it is preferably a flat surface. However, by having the buffer part 40, the structural units 100 exhibit a sufficient adhesive force to the surface 200 having a certain degree of unevenness (surface roughness). In addition, as shown in FIGS. 7A and 7B, the surface 200 is not limited to a flat surface, and may be a curved surface as shown in FIG. 7E. In addition, the surface 200 on which each of the structural units 100 is disposed may not be the same surface (the same plane). For example, as shown in FIGS. 7F and 7G, the plurality of structural units 100 may respectively disposed on different flat surfaces. In addition, the material of the surface 200 is not particularly limited either.

From the viewpoint of improving the adhesive force to the surface 200, the plurality of structural units 100 disposed on the surface 200 may be pressed toward the surface 200, as necessary.

### <Step S12>

Next, the joint parts 90 connected to the plurality of structural units 100 are bound to each other with the binding part 91 such that the plurality of structural units 100 do not detach from the surface 200. For example, from the viewpoint of curbing detachment of the structural units 100, it is preferable that the structure 1000 of the present embodiment have the following configurations during binding of the joint parts 90. It is preferable that the binding part 91 bind the joint parts 90 on a virtual axis VA which passes through the virtual binding point VP and is parallel to the stacking direction z. The distance between the binding part 91 and the virtual binding point VP on the surface 200 is preferably short. The binding part 91 may come into contact with the virtual binding point VP (that is, the distance (shortest distance) between the binding part 91 and the virtual binding point VP is 0 (zero)), or may not come into contact with it. In addition, the binding part 91 may come into contact with each of the structural units 100, or may not come into contact with it. When a load is applied to the structure 1000 via the joint parts 90, it is preferable that the angle formed between the extending direction of one portion 90a of the joint part 90 binding the structural unit 100 and the binding part 91 and the surface 200 be nearly 0° (that is, the one portion 90a and the surface 200 are parallel to each other), for example.

By adhering the structure 1000 to the surface 200 using the method including Steps S11 and S12 described above, the usable range of the structure 1000 can be expanded. For example, as shown in FIG. 7, when the object M1 is suspended from the surface 200 using the structure 1000, it is possible to curb application of a force to each of the structural units 100 in a direction in which detachment is made easier (for example, θ=90°) by binding the joint parts 90 with the binding part 91, and therefore adhesion to the surface 200 can be maintained. Accordingly, as shown in FIGS. 7A, 7C, and 7D, the usage range (here, a range in which the object M1 can be suspended from the surface 200) can be significantly expanded. In addition, the structure 1000 can also be used on the surface 200 (curved surface) (FIG. 7E), and a plurality of structural units 100 can also be used by respectively disposing them on the different surfaces 200 (FIGS. 7F and 7G).

In addition, for example, as shown in FIGS. 8A to 8G, when the target M2 (adherend) is lifted using the structure 1000, it is possible to curb application of a force to each of the structural units 100 in a direction in which detachment is made easier (for example, θ=90°) by binding the joint parts 90 to each other with the binding part 91, and therefore adhesion of the target M2 to the surface 200 can be maintained. Accordingly, as shown in FIGS. 8A, 8C, and 8D, the usage range (here, a range on the surface 200 on which the object M2 can be lifted) can be significantly expanded. In addition, the structure 1000 can also be used on the surface 200 (curved surface) (FIG. 8E), and a plurality of structural units 100 can also be used by respectively disposing them on the different surfaces 200 (FIGS. 8A and 8B). In FIGS. 8A to 8G, the reference sign 92 indicates the gripping part.

Steps S11 and S12 may be performed in this order (Step S11 → Step S12 in FIG. 5A), or may be performed in the reverse order (Step S12 → Step S11) as shown in FIG. 5B. For example, by setting the joint parts 90 in a bound state in advance, suspending of the object M1 using the structure 1000 (FIGS. 7A to 7G) or suspending (lifting) of the target M2 (FIGS. 8A to 8G) can be quickly performed.

### <Step of detaching (peeling) structure from surface>

Hereinafter, a method for detaching (peeling, removing) the structure 1000 of the present embodiment from the surface 200 will be described. The structure 1000 can be readily detached from the surface 200 by applying a load to each of the structural units 100 such that the angle θ (refer to FIG. 1A) becomes an angle, for example, exceeding 20 to 30°. For example, as shown in FIGS. 7B and 8B, by releasing the joint parts 90 which have been bound by the binding part 91, a load is applied to each of the structural units 100 in a direction away from the surface 200 due to the weight of the object M1 or the weight of the target M2, and therefore each of the structural units 100 readily detaches from the surface 200.

In addition, in the case of a structure in which binding of the joint parts 90 cannot be undone once the binding part 91 binds them, the structure 1000 can be detached from the surface 200 by destroying (cutting) the binding part 91 (or the joint parts 90).

Moreover, as shown in FIGS. 9A to 9D, the structural units 100 of the present embodiment may include the detachment knob (peeling puller) 93. In this case, the structure 1000 can be detached from the surface 200 without unbinding the joint parts 90. For example, the structural units 100 can be detached from the surface 200 by pulling the detachment knob 93 in a direction away from the surface 200. For example, by providing the detachment knob 93, the structure 1000 can also be repeatedly adhered and detached with respect to the surface 200 without unbinding the joint parts 90.

For example, the detachment knob 93 may be provided in the support body 10 and/or the action part 30. In addition, for example, in each of the structural units 100, the detachment knob 93 may be provided at an end portion 100E2 on the other side in the disposition direction y (a side of the adhesive films 21 in the attachment/detachment parts 20 disposed parallel to the disposition direction y). The end portion 100E2 is an end portion on the upstream side in the direction Y1 from the movable end 20b to the fixed end 20a of the attachment/detachment part 20 in the disposition direction y. The end portion 100E2 is an end portion on a side opposite to the end portion 100E1 where the joint part 90 is provided in the disposition direction y.

As shown in FIGS. 9A to 9D, the detachment knob 93 may be provided for each structural unit 100. In addition, the detachment knob 93 may be provided in at least two of the plurality of structural units 100, and at least two of these detachment knobs 93 may be joined to each other. In addition, the detachment knob 93 may be provided in all of the structural units 100, and all of these detachment knobs 93 may be joined to each other. By applying a load to the joined detachment knobs 93, the plurality of structural units 100 can be simultaneously peeled off from the surface 200 in a single operation.

The materials and the sizes (widths (thicknesses), lengths, and the like) of the detachment knobs 93 are not particularly limited, and may be suitably selected and designed depending on the intended use of the structure 1000.

### [Method for manufacturing structure]

The method for manufacturing the structure 1000 is not particularly limited. For example, it may be manufactured by preparing a plurality of structural units 100, the joint parts 90, the binding part 91, and other members as necessary, and assembling them by a known method in the related art. The constituent members of the structure 1000 may be self-produced, or commercially available products may be used.

Hereinafter, an example of the method for manufacturing the structural unit 100 will be described.

### <Method for manufacturing structural unit>

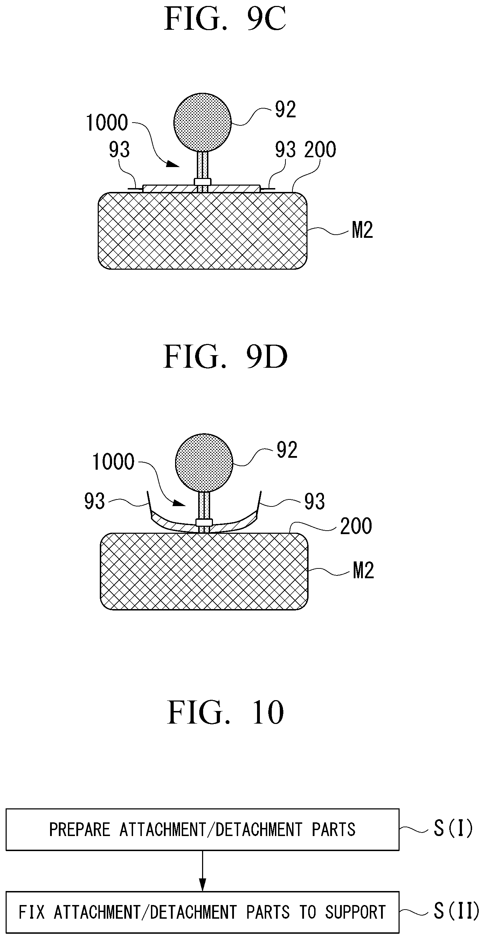

The method for manufacturing the structural unit 100 is not particularly limited. However, for example, as shown in FIG. 10, the method may include Step S(I) of producing a plurality of attachment/detachment parts 20 utilizing the surface tension of a pressure-sensitive adhesive, and Step S(II) of fixing the plurality of produced attachment/detachment parts to the support body 10. For example, the structural unit 100 may be manufactured by a manufacturing method including the following Steps S1 to S4 (refer to FIGS. 11A to 14). Steps S1 to S3 are steps of preparing the attachment/detachment parts (S(I) in FIG. 10), and Step S4 is a step of fixing the attachment/detachment parts 20 (S(II) in FIG. 10).

Step S1: obtaining a temporary support body 71 with skeletal members by fixing first ends 22a of at least two first skeletal members 22 each having the first end 22a and a second end 22b to one surface of a temporary support body 70 with a predetermined interval therebetween;

Step S2: immersing at least the first skeletal members in a composition containing pressure-sensitive adhesive;

Step S3: taking out the temporary support body 71 with skeletal members from the composition and obtaining the attachment/detachment parts 20 each having the shaft 24 formed by the at least two first skeletal members 22 fused by the surface tension of the composition, and the adhesive film 21 made of a pressure-sensitive adhesive supported by the first skeletal member 22; and

Step S4: separating the attachment/detachment parts 20 from the temporary support body 70 and then fixing them to the support body 10

### <Steps S1 to S3>

The attachment/detachment parts 20 can be manufactured using a method similar to the method disclosed in Patent Document 1. This manufacturing method has been completed based on inspiration from a setae forming stage of fly pupae. After a framework is formed with the first skeletal members 22 (typically, fibers), it is filled with a composition, and a structure can be autonomously created using the surface tension thereof. This method makes it possible to more simply create a structure having a complex shape under normal temperature and pressure, and is also advantageous in that a structure can be created at low cost. The contents of Patent Document 1 are incorporated in this specification by reference.

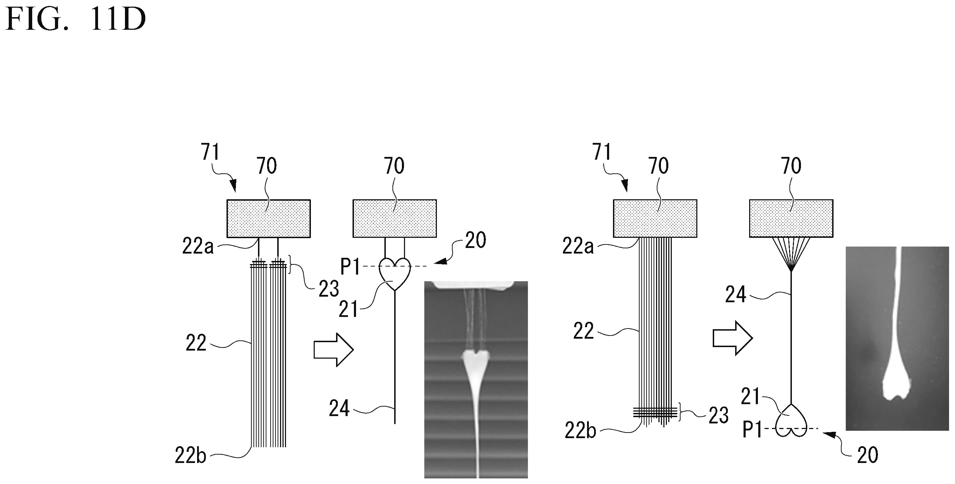

FIGS. 11A to. 11E show sets of drawings with arrows indicating a change from the state after Step S1 to the state after Step S3. In addition, FIGS. 11B to 11D each show two kinds of examples: a configuration example in which the adhesive films 21 are disposed near the temporary support body 70, and a configuration example in which the adhesive films 21 are disposed far from the temporary support body 70. In addition, FIGS. 11C and 11D show photographs of the state after Step S3 for the respective configuration examples.

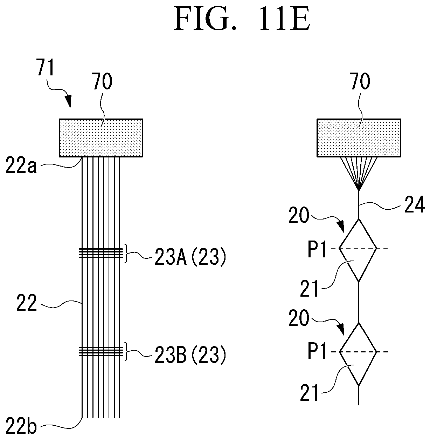

In the temporary support body 71, a plurality of first skeletal members 22 may be joined to each other by one or more second skeletal members 23 (FIGS. 11B to 11E). By adding the second skeletal members 23, it is possible to prevent the first skeletal members 22 in the vicinity of the second skeletal members 23 from being fused together. As a result, it is possible to form the adhesive films 21 having a complex shape, such as a rhombic shape (FIGS. 11C and 11E) and a heart shape (FIG. 11D). Simultaneously, the strength of the adhesive films 21 can also be enhanced. In addition, as can be seen from a comparison of FIGS. 11A and 11B, the adhesive films 21 can be formed at positions farther away from the temporary support body 70 by providing the second skeletal members 23 to prevent the first skeletal members 22 from being fused together. Accordingly, it is possible to avoid contact between the temporary support body 70 and the composition containing a pressure-sensitive adhesive, and contamination of the composition due to contact.

In addition, a plurality of adhesive films 21 can also be formed on the same first skeletal member 22 extending from the temporary support body 70 by adjusting installation locations of the second skeletal members 23. For example, as shown in FIG. 11E, the temporary support body 71 with skeletal members is formed by providing an assembly 23A and an assembly 23B of the second skeletal members 23 away from each other. The first skeletal members 22 are also fused between the assembly 23A and the assembly 23B due to the surface tension of the composition by immersing this temporary support body 71 with skeletal members in a composition containing a pressure-sensitive adhesive, thereby forming the shafts 24. As a result, a plurality of (two in FIG. 11E) adhesive films 21 are obtained.

### <Step S4>

A method for separating the attachment/detachment parts 20 from the temporary support body 70 is not particularly limited. A method for fixing the attachment/detachment parts 20 to the support body 10 is not also particularly limited, and an example will be described below (refer to FIGS. 12 to 14).

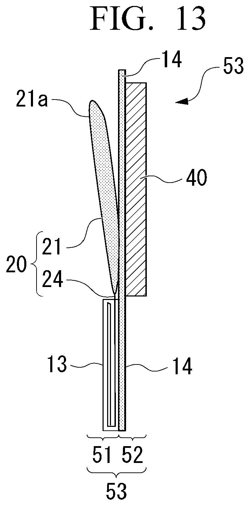

First, as shown in FIG. 12, an adhesive or a sticking agent is applied to one surface of a first support material 13, and a plurality of attachment/detachment parts 20 are arranged and temporarily fixed thereto. At this time, the adhesive surfaces 21a of the plurality of adhesive films 21 are oriented parallel to the one surface of the first support material 13. Further, the shafts 24 of the plurality of attachment/detachment parts 20 are arranged parallel to each other. Next, the first support material 13 to which the shafts 24 are temporarily fixed is folded a plurality of times together with the shafts 24, thereby obtaining a first unit 51. Next, a buffer part (typically, gel) 40 is provided on one surface of a second support material 14, thereby obtaining a second unit 52. The other surface of the first support material 13 (surface on a side where the attachment/detachment parts 20 is not installed) is set to face the other surface of the second support material 14 (surface where the buffer part 40 is not provided), and the first unit 51 and the second unit 52 are adhered to produce a third unit 53 (refer to FIG. 13). A plurality (a desired number) of third units 53 are produced in accordance with the intended use of the structural units 100.

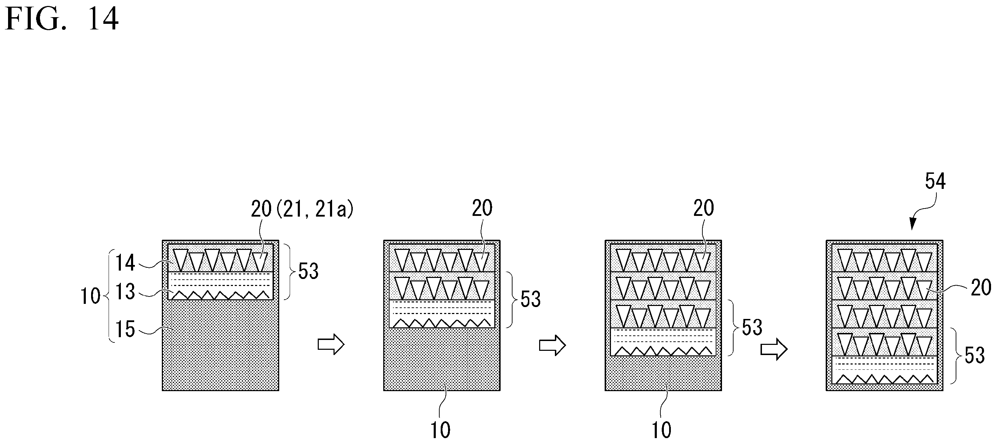

As shown in FIG. 14, a third support material 15 is prepared, and the plurality of third units 53 are disposed and attached to one surface of the third support material 15 such that the adhesive surfaces 21a do not overlap. Accordingly, a support body 54 with attachment/detachment parts is obtained. The materials of the first, second, and third support materials 13 to 15 are not particularly limited. For example, if fabric is used, fixing of the attachment/detachment parts 20 and connection between the support materials 13 to 15 can be readily performed by sewing. In the present embodiment, the support body 10 is a complex (stacked body) of the first, second, and third support materials 13 to 15, the buffer part 40 is disposed inside the support body 10 (between the second support material 14 and the third support material 15), and the shafts 24 of the attachment/detachment parts 20 are disposed (folded together with the first support material 13) inside the support body 10.

The action part 30 is attached to the back side 12 of the support body 10 of the support body 54 with attachment/detachment parts, thereby obtaining the structural unit 100 of the present embodiment.

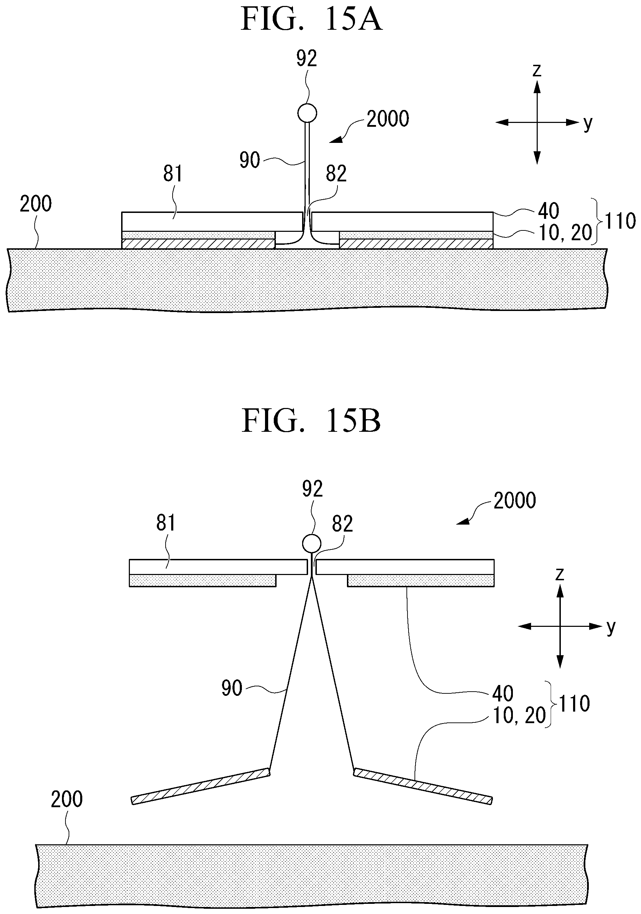

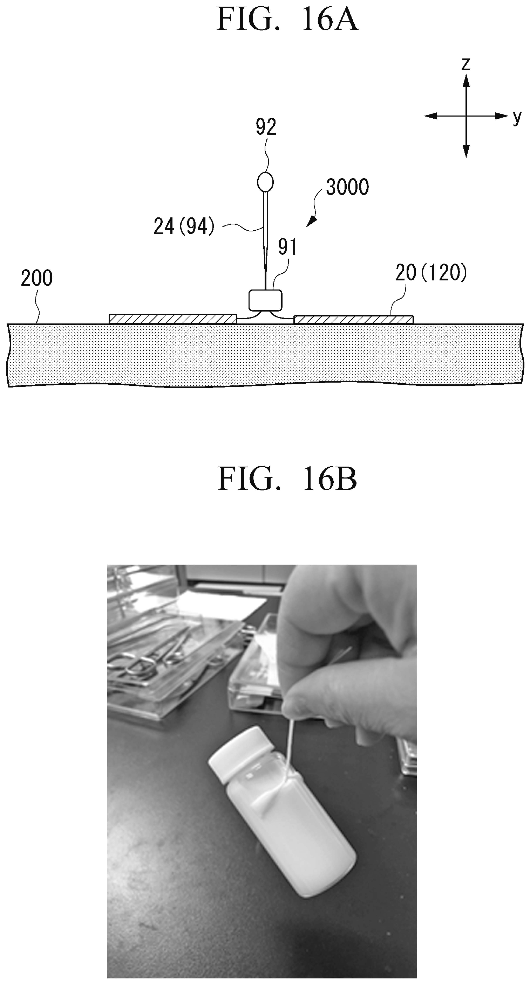

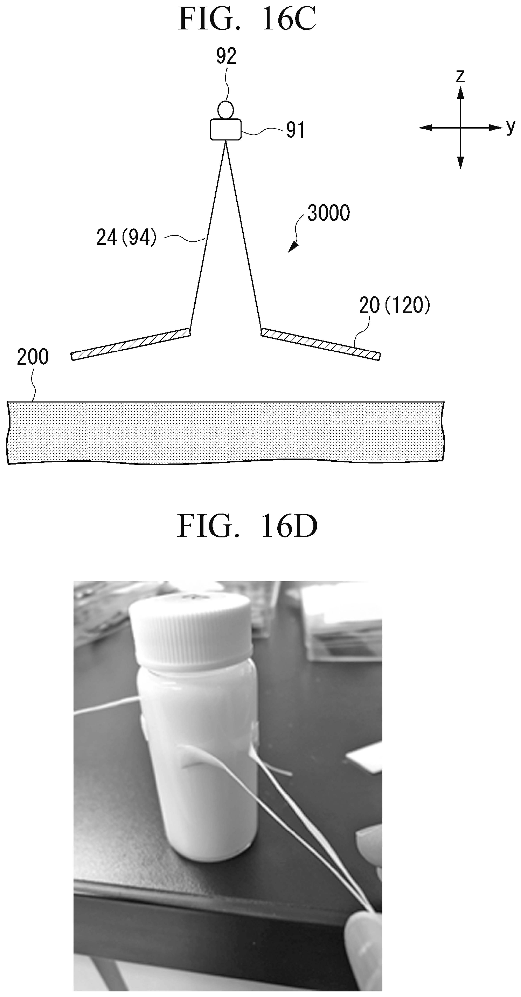

The structure 1000 of the present embodiment is not limited to the forms described above. For example, it may have configurations of the modification examples which will be described below (for example, a structure 2000 in FIGS. 15A and 15B, and a structure 3000 in FIGS. 16A and 16C). The following modification examples exhibit effects similar to those of the structure 1000 described above. In description of the following modification examples, structures (constituent members) whose description is omitted are similar to the structure 1000 described above.

### [Modification Example 1]

The structure 2000 of the present modification example shown in FIGS. 15A and 15B has a binding part 81 (plate-shaped body). For example, the binding part 81 may have a size which can cover all the plurality of structural units 110 when viewed in the z direction while the structure 2000 is disposed on (or adhered to) the surface 200 (flat surface). When the structure 2000 is adhered to the surface 200, all the plurality of structural units 110 can be simultaneously pressed toward the surface 200 via the binding part 81 (plate-shaped body), which is efficient.

A penetration hole 82 through which the joint parts 90 are passed for joining is formed in the binding part 81 of the structure 2000. The penetration hole 82 may be provided with a mechanism for collectively binding (fixing) the joint parts 90 (for example, a spring mechanism). In addition, in the structural units 100 described above, the buffer part 40 is disposed between the attachment/detachment part 20 corresponding to this buffer part 40 and the back side 12 of the support body 10 in the stacking direction z (refer to FIG. 3). However, in the structural units 110 of the present modification example, the buffer part 40 may be disposed between the support body 10 and the binding part 81 in the stacking direction z. In addition, the buffer part 40 may not be adhered to the support body 10. For example, as shown in FIG. 15, the buffer part 40 may be adhered to the binding part 81.

### [Modification Example 2]

The structural unit 100 provided in the structure 1000 described above includes a plurality of attachment/detachment parts 20 (refer to FIG. 2), but the present embodiment is not limited thereto. For example, each of a plurality of structural units 120 provided in the structure 3000 of the present modification example shown in FIGS. 16A and 16C is configured to have one attachment/detachment part 20. In this case, the structural units 120 may include or may not include constituent elements other than the attachment/detachment parts 20, for example, the support body 10, the action part 30, and the buffer part 40. FIGS. 16A and 16C show a form in which the structural unit 120 is configured to have only one attachment/detachment part 20. In the present modification example, a joint part 94 of the structure 3000 is constituted by the shaft 24 of the attachment/detachment part 20.

Compared to the form in which a plurality of attachment/detachment parts 20 are present, in the form of the present modification example having one attachment/detachment part 20, the adhesive force tends to decrease, but this does not pose any practical problem depending on the intended use of the structure 3000. In addition, the adhesive force can also be improved by increasing the attachment/detachment part 20 itself, or the like (for example, expanding the adhesive surface 21a of the adhesive film 21). Since the structure 3000 of the present modification example has a simple structure, the manufacturing costs and the manufacturing time can be reduced, and the method of use is also simplified.

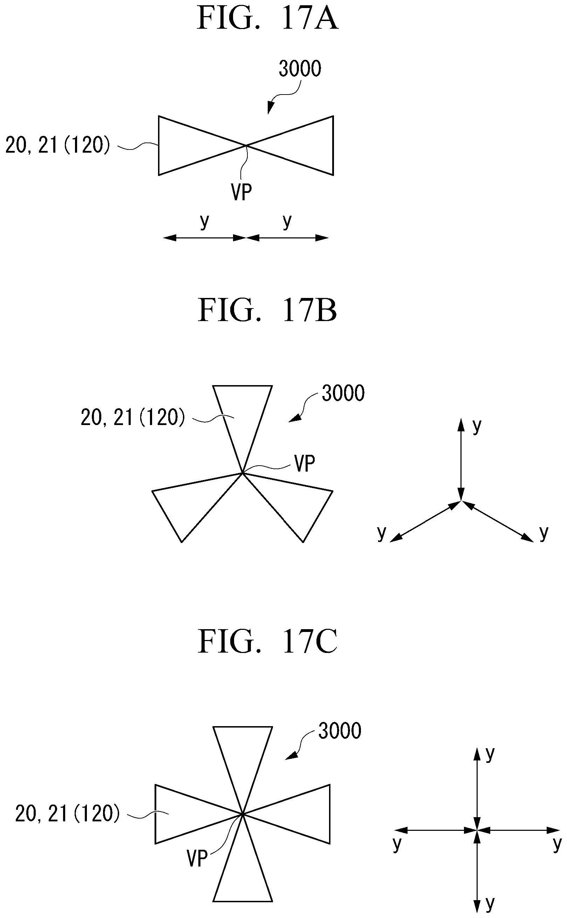

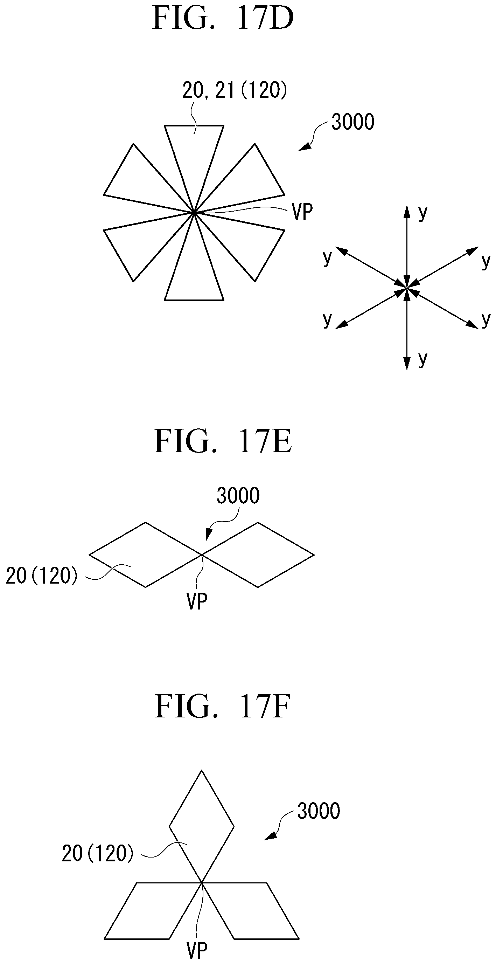

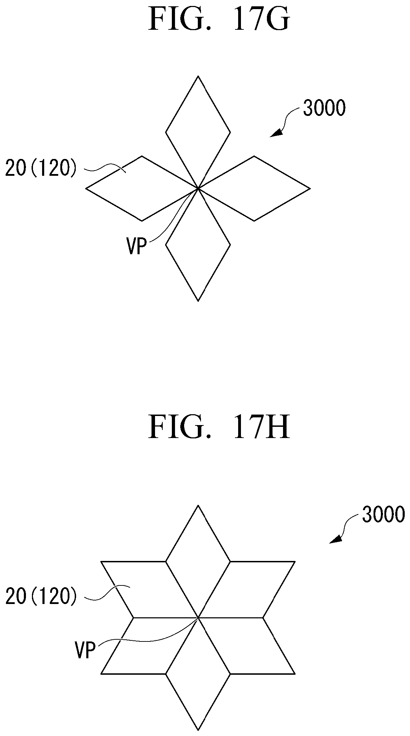

FIGS. 17A to 17H show a situation in which the structure 3000 is adhered to the surface 200. In FIGS. 17A to 17H, n (two to six) structural units 120 (attachment/detachment parts 20) are disposed on the same plane. Each of the structural units 120 is configured to have one attachment/detachment part 20 having the adhesive film 21 with a triangular shape (FIGS. 17A to 17D) or the adhesive film 21 with a rhombic shape (FIGS. 17E to 17H). In the structure 3000 as well, similar to the structure 1000 described above (refer to FIGS. 6A to 6D), it is preferable that the angle formed between the disposition direction y of one structural unit 120 (which will be referred to as a first structural unit) and the disposition direction y of another structural unit 120 adjacent to the first structural unit (which will be referred to as a second structural unit) be nearly (360/n) degrees, and for example, it may be (360/n)±10°. For example, the angle is preferably 180±10° when there are two structural units 120, is preferably 120±10° when there are three of them, is preferably 90±10° when there are four of them, and is preferably 30±10° when there are six of them.

### [Modification Example 3]

The structure 1000 of the present embodiment may have a form in which the joint parts 90 are bound in advance by the binding part 91. That is, the structure 1000 of the present modification example can be manufactured by preparing a plurality of structural units 100, joint parts 90, a binding part 91, and other members as necessary, assembling them using a known method in the related art, and further binding the joint parts 90 with the binding part 91. Since the joint parts 90 have already been in a bound state, the step of binding the joint parts 90 (Step S12 in FIG. 5B) can be omitted in the method for using the structure 1000 of the present modification example, and the structural units 100 can be instantly adhered to the surface 200 (Step S11 in FIG. 5B). In the present modification example, the binding part 91 may not have a structure capable of unbinding the joint parts 90 from each other. In the present modification example, adhesion and detachment may be repeated without unbinding the joint parts 90. In this case, the structure 1000 may have the detachment knob 93 to make detachment easier (FIGS. 9A to 9D).

The embodiment and the modification examples described above may be combined together as long as they do not exclude each other. For example, in Modification Example 3, similar to Modification Example 2, the binding part 81 (plate-shaped body) may also be used.

### [Utilization form of structure]

The structure 1000 of the present embodiment described above (including the structures 2000 and 3000, and the like of the modification examples) can be attached and detached with respect to various locations and can be utilized as a suspender for suspending an object from a surface (a wall, a floor, a ceiling, or the like) (refer to FIGS. 7A to 7G), and can also be utilized as a suspender for suspending an object (for example, a carrying aid) (refer to FIGS. 8A to 8G).

The structure 1000 of the present embodiment can be utilized as a fixture for temporarily fixing an object to a fixing surface. Examples of the fixing surfaces include building walls (exterior walls, interior walls), floors, and ceilings, as well as exterior surfaces (body surfaces, glass surfaces) and interior surfaces of automobiles. Objects to be fixed are not particularly limited, and examples thereof include sensors, lights, cameras, controllers, wall paper, posters, panels, and boards. In addition, the structure 1000 can also be utilized as a fixture for temporarily parking a small unmanned aircraft such as a drone or a radio-controlled aircraft on a fixing surface (a wall, a floor, a ceiling, or the like).

The fixture of the present embodiment may be used by attaching an object to be fixed (for example, a sensor or the like) to the joint parts 90 of the structure 1000 so that the structural units 100 are attached and detached with respect to a fixing surface (for example, a wall), or may be used by fixing the joint parts 90 of the structure 1000 to a fixing surface (for example, a wall) so that the structural units 100 are attached and detached with respect to an object (for example, a sensor). Moreover, the fixture of the present embodiment may be configured to include a plurality of structures 1000 having their joint parts 90 connected. In this case, the structural units 100 of one structure 1000 may be used to be attached and detached with respect to a fixing surface (for example, a wall) and the structural units 100 of another one may be used to be attached and detached with respect to an object (for example, a sensor).

In addition, for example, the structure 1000 of the present embodiment can be utilized as a pickup tool for grasping, moving, and releasing an object. Examples of the targets to be picked up include slippery and hard-to-grasp objects and fragile objects, such as glass plates, glass spheres, lenses, pearls, and beads. Examples of the pickup tools of the present embodiment include pickup robots provided with the structure 1000 at a tip portion which comes into contact with an object. The structure 1000 is preferably installed at a tip portion of a pickup robot in a state in which the joint parts 90 are bound with the binding part 91 in advance, and adhesion and detachment may be repeated without unbinding the joint parts 90. In this case, the structure 1000 may have the detachment knob 93 to make detachment easier (FIG. 9).

Moreover, the structure 1000 of the present embodiment can be utilized in welfare articles such as self-help tools, assistive tools, and assistive hands for elderly and disabled. For example, a user who has difficulty in grasping an object due to a hand disability or a weak grip strength can use a welfare article (self-help tool, assistive tool, assistive hand, or the like) provided with the structure 1000 at its tip, making it easier to grasp an object. The structure 1000 is preferably installed at a tip portion of a welfare article in a state in which the joint parts 90 are bound with the binding part 91 in advance, and adhesion and detachment may be repeated without unbinding the joint parts 90. In this case, the structure 1000 may have the detachment knob 93 to make detachment easier (FIG. 9).

### [Examples]

Hereinafter, the present invention will be described based on examples, but the present invention is not limited thereto.

### [Experiment 1]

In the present experiment, the structure 3000 including two structural units 120 configured to have only one attachment/detachment part 20 as shown in FIGS. 16A to 16D was produced. The experiment was carried out using a curved glass surface (a surface of a screw bottle) as a surface of an attachment/detachment object.

First, as shown in FIG. 11B, upper ends (first ends 22a) of 25 first skeletal members 22 were fixed to one surface of a temporary support body 70 with a predetermined interval therebetween, and the first skeletal members 22 were joined to each other using five second skeletal members 23. A temporary support body 71 with skeletal members provided with five sets having the same configuration (25 first skeletal members 22 × five sets = 125 first skeletal members in total) was produced. Paper (manufactured by KOKUYO Co., Ltd., Tack Index, thickness: 0.14 mm, size: 29 mm ×23 mm) was used as the temporary support body 70, and nylon threads (fibers) with a diameter of 0.06 mm and a length of 13 cm were used as the first skeletal members 22 and the second skeletal members 23. The interval between the first skeletal members 22 (interval between the first ends 22a) of the same set (25 members) was set to 0.05 mm to 2 mm, and the interval between adjacent sets was set to 10 mm to 20 mm.

Next, an acrylic resin solution was used as a composition containing a pressure-sensitive adhesive. The first skeletal members 22 and the second skeletal members 23 of the temporary support body 71 with skeletal members were immersed in the composition and taken out immediately. At this time, care was taken to prevent the temporary support body 70 from coming into contact with the composition. In the taken-out temporary support body 71 with skeletal members, five attachment/detachment parts 20 were formed, each having: a shaft 24 formed by fusion of the 25 first skeletal members 22 of the same set due to the surface tension of the composition; and an adhesive film 21 (triangular shape) made of a pressure-sensitive adhesive supported by the first skeletal members 22 and the second skeletal members 23. This was dried at 50°C for 30 minutes to two days to cure the acrylic resin. Thereafter, the five attachment/detachment parts 20 were separated from the temporary support body 70, and extra nylon fibers (first skeletal members 22) were also cut off. The size of each of the obtained attachment/detachment parts 20 was as follows:
the area of the adhesive surface (triangular shape) 21a: approximately 74 mm² (transverse width (base side) 7 mm × length (height) 18 mm × 1/2);
the thickness of the adhesive film 21: 0.3 mm to 2 mm; and
the thickness of the shaft 24: 0.3 mm to 2 mm.

Using two attachment/detachment parts 20 (structure 3000) of the five attachment/detachment parts 20 produced, their shafts 24 (joint parts 94) were joined and bound to each other in a location close to the base part (a location close to the adhesive film 21).

A weight (resin liquid) was placed in a glass screw bottle (capacitance: 50 mL) to make the gross weight of 79 g. The adhesive films 21 of the structure 3000 (two attachment/detachment parts 20) with the shafts 24 (joint parts 94) bound thereto were brought into contact with the surface 200 (glass surface) of the screw bottle and gently pressed against the surface 200 to be adhered. In this state, the shafts 24 (joint parts 94) of the structure 3000 (two attachment/detachment parts 20) were grasped, and the screw bottle was successfully lifted (refer to the photograph in FIG. 16B). Moreover, a load by the centrifugal force was applied by rotating the screw bottle about the location where the shafts 24 (joint parts 94) were grasped as the rotation center. Even when it was rotated, the structure 3000 did not detach from the screw bottle.

Next, the joined shafts 24 (joint parts 94) of the structure 3000 (two attachment/detachment parts 20) were released (unbound). The attachment/detachment parts 20 could be readily detached from the surface 200 by applying a force to roll up the adhesive films 21 from the base part (shaft 24 side) of the surface 200 of the screw bottle while holding each of the shafts 24 of the attachment/detachment parts 20.

Moreover, the structure 3000 (two attachment/detachment parts 20) described above was adhered to the object surface 200 (curved glass surface), and the object was repeatedly lifted, rotated, and detached 200 times. During the lifting and rotation of the object, the structure 3000 did not unintentionally fall off (detach) from the object and exhibited a sufficient adhesive force. On the other hand, it was easy to intentionally detach the structure 3000, and no damage or dirt remained on the surface 200 after detachment. Through the present experiment, it could be confirmed that the structure 3000 exhibited favorable adhesiveness and detachability on curved glass surfaces.

### [Experiment 2]

Using the structure 3000 (two attachment/detachment parts 20) produced in Experiment 1, attachment/detachment experiments were carried out on various kinds of surfaces 200. Seven kinds of surfaces, such as glass, silicon (Si), concrete, marble, wood, wall paper (PVC: polyvinyl chloride), and plastered wall, were produced as the surfaces 200.

First, the following experiment was carried out on a glass plate. Similar to Experiment 1, the shafts 24 (joint parts 94) of the structure 3000 were joined and bound to each other in a location close to the base part and were adhered to the surface (glass surface) of the glass plate. In this state, a peel strength test in which the bound shafts 24 (joint parts 94) of the structure 3000 were pulled in a direction at 90 degrees with respect to the glass surface was performed. The peel strength was 6.14 N. This strength was approximately 10 times stronger than when a similar test was performed using one attachment/detachment part 20. Next, the joined shafts 24 (joint parts 94) of the structure 3000 (two attachment/detachment parts 20) were released (unbound), and then the structure 3000 could be readily detached from the glass surface. Moreover, the structure 3000 was repeatedly adhered and detached with respect to the glass surface 200 times. During the adhesion of the object, the structure 3000 did not unintentionally detach from the glass surface and exhibited a sufficient adhesive force. On the other hand, it was easy to intentionally detach the structure 3000, and no damage or dirt remained on the glass surface after detachment.

Similar experiments (adhesion and removal of the structure 3000) were carried out on six other kinds of surfaces (silicon (Si), concrete, marble, wood, wall paper, and plastered wall) instead of the glass surface, and favorable results similar to those obtained with the glass surface were obtained. From the results of the present experiment, it could be confirmed that the structure 3000 exhibited favorable adhesiveness and detachability not only on flat planar surfaces but also on uneven surfaces.

### INDUSTRIAL APPLICABILITY

A structure of the present invention is attachable and detachable with respect to various locations. For example, the structure can be utilized as a suspender, a fixture, a pickup tool, a welfare article, or the like.

### REFERENCE SIGNS LIST

10 Support body
11 Facing side
12 Back side
13 First support material
14 Second support material
15 Third support material
20 Attachment/detachment part
20a Fixed end
20b Movable end
21 Adhesive film
21a Adhesive surface
22, 22A, 22B First skeletal member
22a First end
22b Second end
23 Second skeletal member
24 Shaft
30 Action part
40 Buffer part
51 First unit
52 Second unit
53 Third unit
54 Support body with attachment/detachment part
70 Temporary support body
71 Temporary support body with skeletal member
82 Penetration hole
90, 94 Joint part
91, 81 Binding part
92 Gripping part
93 Detachment knob
100, 110, 130 Structural unit
100E1 End part on one side in disposition direction y
100E2 End part on the other side in disposition direction y
200 Surface
1000, 2000, 3000 Structure
z Stacking direction
y Disposition direction
x Width direction
F1 Force direction
Y1 Direction from movable end toward fixed end when attachment/detachment part is adhered to object surface
P1 Predetermined position in disposition direction
M1 Object
M2 Object
VP Virtual binding point
VA Virtual axis

## Claims

1. A structure that is attachable and detachable with respect to a surface of an object, the structure comprising:
a plurality of structural units attachable and detachable with respect to the surface of the object;
joint parts respectively connected to the plurality of structural units; and
a binding part configured to bind the joint parts connected to the plurality of structural units to each other such that the plurality of structural units do not detach from the surface when the structure is adhered to the surface,
wherein each of the plurality of structural units has at least one attachment/detachment part, and
the attachment/detachment part includes a shaft, and an adhesive film provided at an end of the shaft.

2. The structure according to claim 1,
wherein the binding part is formed by binding the joint parts joined to the plurality of structural units to each other.

3. The structure according to claim 1,
wherein the binding part is a separate member from the joint parts.

4. The structure according to any one of claims 1 to 3,
wherein at least one of the plurality of structural units is further provided with a detachment knob.

5. The structure according to claim 4,
wherein at least two of the plurality of structural units are provided with the detachment knob, and the detachment knobs are joined to each other.

6. The structure according to any one of claims 1 to 5,
wherein the number of the structural units included in the structure is two to six.

7. The structure according to any one of claims 1 to 6,
wherein each of the plurality of structural units has
a support body having a facing side disposed in a manner of facing the surface when being adhered to the surface, and a back side positioned on a side opposite to the facing side in a stacking direction intersecting the surface,
a plurality of the attachment/detachment parts supported by the facing side of the support body and attachable and detachable with respect to the surface, and
a buffer part corresponding to at least one of the plurality of attachment/detachment parts and disposed between the at least one corresponding attachment/detachment part and the back side of the support body in the stacking direction, and
each of the plurality of attachment/detachment parts
is disposed with the shaft toward one side in a disposition direction orthogonal to the stacking direction and with the adhesive film toward the other side,
has the one side in the disposition direction fixed to the support body and forming a fixed end, and
has the other side in the disposition direction forming a movable end configured to be movable in a direction away from the support body with the fixed end as a fulcrum.

8. The structure according to claim 7,
wherein in each of the plurality of structural units, the joint part is connected to an end portion on the one side in the disposition direction.

9. The structure according to any one of claims 1 to 6,
wherein the number of the attachment/detachment parts constituting each of the plurality of structural units is one, and the shaft of the attachment/detachment part constitutes the joint part.

10. The structure according to any one of claims 1 to 9,
wherein in the attachment/detachment part,
the shaft is formed by a fused part in which parts of a plurality of first skeletal members are fused together, and
the adhesive film is supported by non-fused parts of the plurality of first skeletal members.

11. The structure according to any one of claims 1 to 10,
wherein the joint parts are bound to each other by the binding part.

12. A suspender comprising:
the structure according to any one of claims 1 to 11.

13. A fixture comprising:
the structure according to any one of claims 1 to 11.

14. A pickup tool comprising:
the structure according to any one of claims 1 to 11.

15. A welfare article comprising:
the structure according to any one of claims 1 to 11.

16. A method for using the structure according to any one of claims 1 to 10, the method comprising:
adhering the plurality of structural units to the surface in a state in which the plurality of structural units are disposed around a virtual binding point set on the surface with the shaft side of the attachment/detachment part toward the virtual binding point; and
binding the joint parts connected to the plurality of structural units to each other with the binding part such that the plurality of structural units do not detach from the surface.
